# EUROPEAN PATENT APPLICATION

(11) **EP 1 372 209 A1**
(43) Date of publication of application: **17.12.2003**
(21) Application number: 02705328.9
(22) Date of filing: 19.03.2002
(51) Int. Cl.: H01M 10/40, H01M 4/02, H01M 4/58, H01M 4/40

(54) **BATTERY**

(30) Priority: 19.03.2001 JP 2001078609
(71) Applicant: Sony Corporation, Tokyo 141-0001 (JP)
(72) Inventor: SHIBAMOTO, Gorou, c/o Sony Corporation, Shinagawa-ku, Tokyo 141-0001 (JP); FUJITA, Shigeru, c/o Sony Corporation, Shinagawa-ku, Tokyo 141-0001 (JP); ADACHI, Momoe, c/o Sony Corporation, Shinagawa-ku, Tokyo 141-0001 (JP); AKASHI, Hiroyuki, c/o Sony Corporation, Shinagawa-ku, Tokyo 141-0001 (JP)
(74) Representative: Müller - Hoffmann & Partner
(86) International application number: JP0202586
(87) International publication number: WO02078113

(57) **Abstract**

In a battery newly developed by inventors of the invention in which the capacity of the anode is represented by the sum of a capacity component by insertion and extraction of light metal and a capacity component by precipitation and dissolution of the light metal, a further improvement in a volume energy density or a weight energy density can be achieved. Moreover, a short circuit, damage or the like in the battery due to the external application of pressure or the like can be prevented from being extended in the vicinity of an outermost circumference or an innermost circumference of a spirally wound electrode body in the battery. An outermost circumferential surface of a spirally wound electrode body (20) is covered with a cathode current collector (21a). The cathode current collector (21a) has an exposed portion with an outer circumfernetial surface not covered with a cathode mixed layer (cathode active material layer) in a position corresponding to at least one turn around an outermost circumference of the spirally wound electrode body (20). When an outermost circumferential surface of the spirally wound electrode body (20) is covered with the anode current collector (22a), the anode current collector (22a) has a portion with an outer circumferential surface not covered with an anode mixed layer (anode active material layer) in a position corresponding to at least one turn around the outermost circumference of the spirally wound electrode body (20).

## Description

### TECHNICAL FIELD

The present invention relates to a battery comprising a cathode, an anode and an electrolyte, and more specifically a battery in which the capacity of the anode is represented by the sum of a capacity component by insertion and extraction of light metal and a capacity component by precipitation and dissolution of the light metal.

### BACKGROUND ART

In recent years, portable electronic devices typified by camera/VTR (video tape recorder) combination systems, cellular phones or laptop computers have come into widespread, and a reduction in size and weight of the devices and an increase in continuous driving time of the devices have been strongly required. Accordingly, as portable power sources for the electronic devices, secondary batteries with a higher capacity and a higher energy density have been in increasing demand.

As the secondary batteries which can obtain a higher energy density, for example, a lithium-ion secondary battery using a material capable of inserting and extracting lithium such as a carbon material or the like for an anode, or a lithium secondary battery using lithium metal for the anode is cited. Specifically, in the lithium secondary battery, a theoretical electrochemical equivalent of the lithium metal is as large as 2054 mAh/cm³, which is 2.5 times larger than that of a graphite material used in the lithium-ion secondary battery, so it is expected that the lithium secondary battery can obtain a higher energy density than the lithium-ion secondary battery. A large number of researchers or the like have been conducting research and development aimed at putting the lithium secondary battery to practical use (for example, Lithium Batteries edited by Jean-Paul Gabano, Academic Press (1983)).

However, the lithium secondary battery has a problem that when a charge-discharge cycle is repeated, a large decline in its discharge capacity occurs, so it is difficult to put the lithium secondary battery to practical use. The decline in the capacity occurs because the lithium secondary battery uses a precipitation/dissolution reaction of the lithium metal in the anode. In accordance with charge and discharge, the volume of the anode largely increases or decreases by the amount of the capacity corresponding to lithium ions transferred between the cathode and the anode, so the volume of the anode is largely changed, thereby it is difficult for a dissolution reaction and a recrystallization reaction of a lithium metal crystal to reversibly proceed. Further, the higher energy density the lithium secondary battery achieves, the more largely the volume of the anode is changed, and the more pronouncedly the capacity declines.

Therefore, the inventors of the invention have developed a novel secondary battery in which the capacity of the anode is represented by the sum of a capacity component by insertion and extraction of lithium and a capacity component by precipitation and dissolution of lithium. The secondary battery uses a carbon material capable of inserting and extracting lithium for the anode, and lithium is precipitated on a surface of the carbon material during charge. The secondary battery holds promise of improving charge-discharge cycle characteristics while achieving a higher energy density.

In general, in a nononaqueous electrolyte solution or a solid electrolyte battery, when dynamic pressure is externally applied to the battery, a short circuit between a cathode and an anode in the battery occurs, thereby a pronounced decline in an electromotive force of the whole battery, damage to the battery, heat generation, smoking or the like in the battery may occur. Specifically, in a lithium secondary battery newly developed by the inventors of the invention, as described above, the capacity of the anode is represented by the sum of a capacity component by insertion and extraction of light metal and a capacity component by precipitation and dissolution of the light metal, so the lithium secondary battery has a higher capacity than a conventional lithium battery. Therefore, it is strongly required to more reliably prevent a short circuit between the cathode and the anode in the battery. Moreover, the conventional battery generally has an internal structure in which a strip-shaped current collector made of metal foil with front and back surfaces to which an active material is applied, that is, a so-called solidly coated electrode is spirally wound, and a cathode active material layer or an anode active material layer which does not contribute to an electromotive force is formed on an outermost circumferential surface or an innermost circumferential surface of the spirally wound body, so the cathode active material layer or the anode active material layer is unnecessary in terms of an energy density. Further, such a active material layer unnecessarily formed on the outermost circumferential surface or the innermost circumferential surface is disposed in a position which is the most susceptible to damage when dynamic pressure or the like is externally applied to the battery, but in terms of the dynamic strength of the material of an spirally wound electrode body in the battery, the spirally wound electrode body is made of an extremely soft material such as polymer or the like, so the damage does not stop in the active material layer, and is easily extended into an inner portion of the spirally wound electrode body. Moreover, in recent years, specifically in the lithium battery, in addition to a so-called cylindrical battery, a thin battery with a thickness of a few mm has become popular, and specifically in such a thin battery, removing an excess thickness of the spirally wound structure in the battery as much as possible contributes to a remarkable improvement in the energy density.

In view of the foregoing, it is an object of the invention to provide a battery such as a lithium battery capable of achieving a further improvement in a volume energy density or a weight energy density, and preventing a short circuit, damage or the like in the battery caused by pressure externally applied to the battery from being extended in the vicinity of an outermost circumference or an innermost circumference of a spirally wound electrode body.

### DISCLOSURE OF THE INVENTION

A first battery according to the invention comprises a spirally wound body formed through spirally winding a laminate including a cathode having a cathode active material layer on a surface of a cathode current collector and an anode having an anode active material layer on a surface of an anode current collector with a separator in between, wherein the capacity of the anode is represented by the sum of a capacity component by insertion and extraction of light metal and a capacity component by precipitation and dissolution of the light metal, and an outermost circumferential surface of the spirally wound body is covered with the cathode current collector, and the cathode current collector has an exposed portion with an outer circumferential surface not covered with the cathode active material layer in a position corresponding to at least one turn around an outermost circumference of the spirally wound body.

A second battery according to the invention comprises a spirally wound body formed through spirally winding a laminate including a cathode having a cathode active material layer on a surface of a cathode current collector and an anode having an anode active material layer on a surface of an anode current collector with a separator in between, wherein the capacity of the anode is represented by the sum of a capacity component by insertion and extraction of light metal and a capacity component by precipitation and dissolution of the light metal, and an outermost circumferential surface of the spirally wound body is covered with the anode current collector, and the anode current collector has an exposed portion with an outer circumferential surface not covered with the cathode active material layer in a position corresponding to at least one turn around an outermost circumference of the spirally wound body.

A third battery according to the invention comprises a spirally wound body formed through spirally winding a laminate including a cathode having a cathode active material layer on a surface of a cathode current collector and an anode having an anode active material layer on a surface of an anode current collector with a separator in between, wherein the capacity of the anode is represented by the sum of a capacity component by insertion and extraction of light metal and a capacity component by precipitation and dissolution of the light metal, and an innermost circumferential surface of the spirally wound body is covered with the cathode current collector, and the cathode current collector has an exposed portion with an inner circumferential surface not covered with the cathode active material layer in a position corresponding to at least one turn around an innermost circumference of the spirally wound body.

A fourth battery according to the invention comprises a spirally wound body formed through spirally winding a laminate including a cathode having a cathode active material layer on a surface of a cathode current collector and an anode having an anode active material layer on a surface of an anode current collector with a separator in between, wherein the capacity of the anode is represented by the sum of a capacity component by insertion and extraction of light metal and a capacity component by precipitation and dissolution of the light metal, and an innermost circumferential surface of the spirally wound body is covered with the anode current collector, and the anode current collector has an exposed portion with an inner circumferential surface not covered with the anode active material layer in a position corresponding to at least one turn around a innermost circumference of the spirally wound body.

A fifth battery according to the invention comprises a spirally wound body formed through spirally winding a laminate including a cathode having a cathode active material layer on a surface of a cathode current collector and an anode having an anode active material layer on a surface of an anode current collector with a separator in between, wherein the capacity of the anode is represented by the sum of a capacity component by insertion and extraction of light metal and a capacity component by precipitation and dissolution of the light metal, and the cathode current collector has an exposed portion with an outer circumferential surface and an inner circumferential surface both not covered with a cathode active material layer, the anode current collector has an exposed portion with an outer circumferential surface and an inner circumferential surface both not covered with an anode active material layer, and a laminate including the exposed portion of the cathode current collector and the exposed portion of the anode current collector with a separator in between is disposed on an outermost circumference of the spirally wound body.

A sixth battery according to the invention comprises a spirally wound body formed through spirally winding a laminate including a cathode having a cathode active material layer on a surface of a cathode current collector and an anode having an anode active material layer on a surface of an anode current collector with a separator in between, wherein the capacity of the anode is represented by the sum of a capacity component by insertion and extraction of light metal and a capacity component by precipitation and dissolution of the light metal, and the cathode current collector has an exposed portion with an outer circumferential surface and an inner circumferential surface both not covered with a cathode active material layer, the anode current collector has an exposed portion with an outer circumferential surface and an inner circumferential surface both not covered with an anode active material layer, and a laminate including the exposed portion of the cathode current collector and the exposed portion of the anode current collector with a separator in between is disposed on an innermost circumference of the spirally wound body.

In the first battery according to the invention, the outermost circumferential surface of the spirally wound body is covered with the cathode current collector, and the cathode current collector has an exposed portion with an outer circumferential surface not covered with the cathode active material layer in a position corresponding to at least one turn around the outermost circumference of the spirally wound body. Therefore, as the cathode active material layer is not disposed in the exposed portion (on the outermost circumferential surface), the volume energy density or the weight energy density can be improved. Further, when an external pressure or an external force causing damage to the interior of the battery is applied to the battery, the spirally wound body on an inner circumferential side can be protected by the cathode current collector.

In the second battery according to the invention, the outermost circumferential surface of the spirally wound body is covered with the anode current collector, and the anode current collector has an exposed portion with an outer circumferential surface not covered with the anode active material layer in a position corresponding to at least one turn around the spirally wound body. Therefore, as the anode active material layer is not disposed in the exposed portion on the outermost circumferential surface, the volume energy density or the weight energy density can be improved. Further, when an external pressure or an external force causing damage to the interior of the battery is applied to the battery, the spirally wound body on an inner circumferential side can be protected by the anode current collector.

In the third battery according to the invention, the innermost circumferential surface of the spirally wound body is covered with the cathode current collector, and the cathode current collector has an exposed portion with an inner circumferential surface not covered with the cathode active material layer in a position corresponding to at least one turn around the spirally wound body. Therefore, as the cathode active material layer is not disposed in the exposed portion on the innermost circumferential surface, the volume energy density or the weight energy density can be improved. Further, when a pressure is externally applied to the battery, the spirally wound body on an outer circumferential side can be protected by the cathode current collector.

In the fourth battery according to the invention, the innermost circumferential surface of the spirally wound body is covered with the anode current collector, and the anode current collector has an exposed portion with an inner circumferential surface not covered with the anode active material layer in a position corresponding to at least one turn around the spirally wound body. Therefore, as the anode active material layer is not disposed in the exposed portion on the innermost circumferential surface, the volume energy density or the weight energy density can be improved. Further, when a pressure is externally applied to the battery, the spirally wound body on an outer circumferential side can be protected by the anode current collector.

In the fifth battery according to the invention, the cathode current collector has an exposed portion with an outer circumferential surface and an inner circumferential surface both not covered with a cathode active material, and the anode current collector has an exposed portion with an outer circumferential surface and an inner circumferential surface both not covered with an anode active material layer, and the outermost circumferential surface of the spirally wound body is covered with a laminate including the exposed portion of the cathode current collector and the exposed portion of the anode current collector with a separator in between. Therefore, as the anode active material layer is not disposed in the exposed portion of the anode current collector, and the cathode active material layer is not disposed in the exposed portion of the cathode current collector, the volume energy density or the weight energy density can be improved. Further, when a pressure is externally applied to the battery, the spirally wound body on an inner circumferential side can be protected by the current collector and the anode current collector.

In the sixth battery according to the invention, the cathode current collector has an exposed portion with an outer circumferential surface and an inner circumferential surface both not covered with a cathode active material layer, and the anode current collector has an exposed portion with an outer circumferential surface and an inner circumferential surface both not covered with an anode active material layer, and an innermost circumferential surface of the spirally wound body is covered with a laminate including the exposed portion of the cathode current collector and the exposed portion of the anode current collector with a separator in between. Therefore, as the anode active material layer is not disposed in the exposed portion of the anode current collector, and the cathode active material layer is not disposed in the exposed portion of the cathode current collector, the volume energy density or the weight energy density can be improved. Further, when a pressure is externally applied to the battery, the spirally wound body on an outer circumferential side can be protected by the cathode current collector or the anode current collector.

Other and further objects, features and advantages of the invention will appear more fully from the following description.

### BRIEF DESCRIPTION OF THE DRAWINGS

FIG. 1 is an illustration showing a main structure of a secondary battery to be charged according to an embodiment of the invention;
FIG. 2 is an enlarged view of a part of a spirally wound electrode body in the secondary battery shown in FIG. 1;
FIG. 3 is an illustration showing a structure in the vicinity of an outermost circumference of the spirally wound electrode body according to the embodiment of the invention;
FIG. 4 is an illustration showing a structure of an outermost circumferential portion of another spirally wound electrode body according to the embodiment of the invention;
FIGs. 5A and 5B are illustrations showing a structure of an innermost circumferential portion of still another spirally wound electrode body according to the embodiment of the invention;
FIG. 6 is an illustration showing an outermost circumferential portion of a further spirally wound electrode body according to the embodiment of the invention;
FIG. 7 is a schematic view of a cathode according to the embodiment of the invention;
FIG. 8 is a schematic view of another cathode according to the embodiment of the invention;
FIG. 9 is a schematic view of still another cathode according to the embodiment of the invention;
FIG. 10 is a schematic view of a further cathode according to the embodiment of the invention;
FIG. 11 is a schematic view of an anode according to the embodiment of the invention;
FIG. 12 is a schematic view of another anode according to the embodiment of the invention;
FIG. 13 is a schematic view of still another anode according to the embodiment of the invention;
FIG. 14 is a schematic view of a further anode according to the embodiment of the invention;
FIG. 15 is a schematic view of a still further anode according to the embodiment of the invention;
FIG. 16 is a schematic view of a still anode according to the embodiment of the invention;
FIG. 17 is an illustration showing an example of a spirally wound electrode body for a thin battery according to an embodiment of the invention;
FIG. 18 is an illustration showing an example of a thin solid electrolyte battery according to an embodiment of the invention;
FIG. 19 is a table providing results of a test in Examples 1 through 5;
FIG. 20 is a table providing results of a test in Examples 6 through 10;
FIG. 21 is an illustration showing a modification of the spirally wound electrode body of the solid electrolyte battery;
FIG. 22 is a schematic view of a still anode according to the embodiment of the invention;
FIG. 23 is an illustration showing an innermost circumferential portion of a still further spirally wound electrode body according to the embodiment of the invention;
FIG. 24 is a schematic view of a still cathode according to the embodiment of the invention;
FIG. 25 is an illustration showing an innermost circumferential portion of a still spirally wound electrode body according to the embodiment of the invention;
FIG. 26 is a schematic view of a still cathode according to the embodiment of the invention;
FIG. 27 is a schematic view of a still anode according to the embodiment of the invention;
FIG. 28 is an illustration showing an innermost circumferential portion of a still spirally wound electrode body according to the embodiment of the invention; and
FIG. 29 is an illustration showing an example of a structure of a spirally wound electrode body using a solidly coated electrode in the vicinity of an outermost circumference thereof as a comparative example.

### BEST MODE FOR CARRYING OUT THE INVENTION

Preferred embodiments of the invention will be described in more detail below referring to the accompanying drawings.

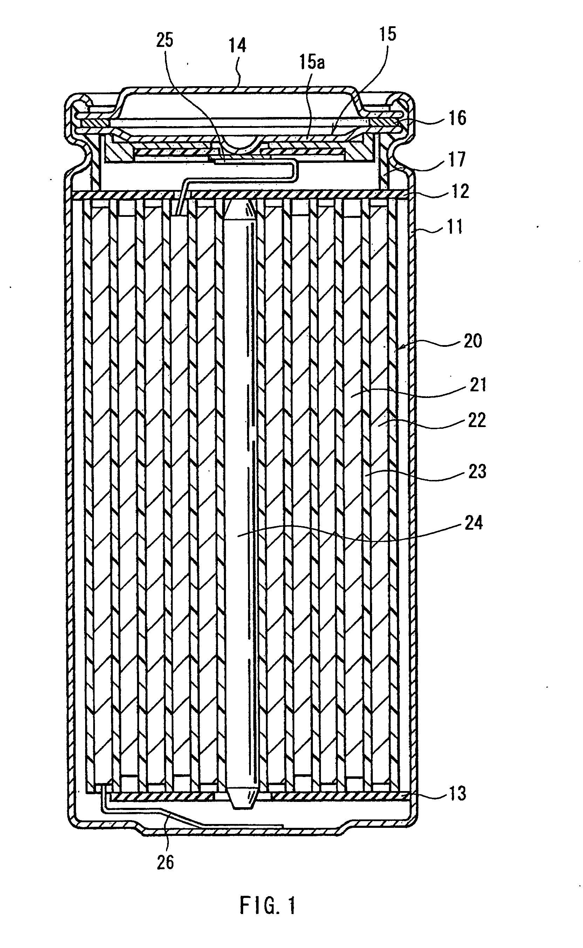

FIG. 1 is a sectional view of a secondary battery to be charged according to an embodiment of the invention. The secondary battery is a so-called jelly roll type, and comprises a spirally wound electrode body 20 including a strip-shaped cathode 21 and a strip-shaped anode 22 spirally wound with a separator 23 in between in a substantially hollow cylindrical-shaped battery can 11. The battery can 11 is made of, for example, nickel-plated iron. An end portion of the battery can 11 is closed, and the other end portion thereof is opened. In the battery can 11, a pair of insulating plates 12 and 13 are disposed so that the spirally wound electrode body 20 is sandwiched therebetween in a direction perpendicular to a spirally wound circumferential surface of the spirally wound electrode body 20.

In the opened end portion of the battery can 11, a battery cover 14 and, a safety valve mechanism 15 and a positive temperature coefficient device (PTC device) 16 disposed inside the battery cover 14 are mounted through caulking by a gasket 17, and the interior of the battery can 11 is sealed. The battery cover 14 is made of, for example, the same material as that of the battery can 11. The safety valve mechanism 15 is electrically connected to the battery cover 14 through the PTC device 16, and when internal pressure in the battery increases to higher than a certain extent due to an internal short circuit or external application of heat, a disk plate 15a is flipped so as to disconnect the electrical connection between the battery cover 14 and the spirally wound electrode body 20. When a temperature rises, the PTC device 16 limits a current by an increased resistance, thereby resulting in preventing abnormal heat generation by a large current. The PTC device 16 is made of, for example, barium titanate semiconductor ceramic. The gasket 17 is made of, for example, an insulating material, and its surface is coated with asphalt.

The spirally wound electrode body 20 is wound around, for example, a center pin 24. A cathode lead 25 made of aluminum or the like is connected to the cathode 21 of the spirally wound electrode body 20, and an anode lead 26 made of nickel or the like is connected to the anode 22. The cathode lead 25 is welded to the safety valve mechanism 15 so as to be electrically connected to the battery cover 14, and the anode lead 26 is welded to the battery can 11 so as to be electrically connected to the battery can 11.

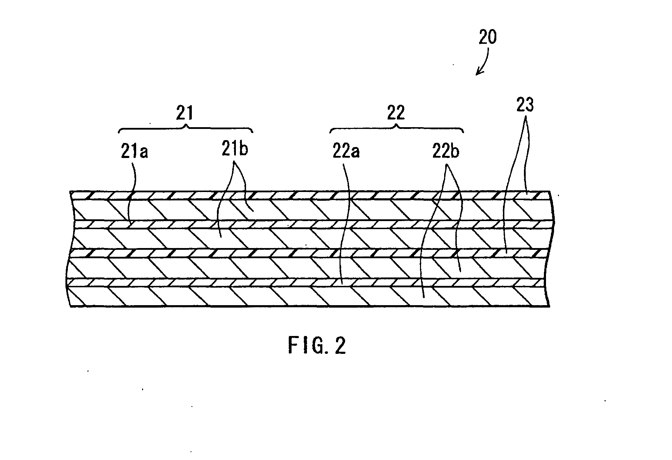

FIG. 2 is an enlarged view of a part of the spirally wound electrode body 20 shown in FIG. 1. When the cathode 21 is disposed on an innermost circumference or an outermost circumference of a spirally wound body, the cathode 21 has a structure in which a cathode mixed layer 21b is disposed on both sides of a cathode current collector 21a having a pair of surfaces facing each other except for an end portion with a length corresponding to at least one turn around the innermost circumference or the outermost circumference of the spirally wound body. The spirally wound body will be described later. The cathode current collector 21a is made of metal foil such as aluminum foil, nickel foil or stainless foil with, for example, a thickness of approximately 5 µ m to 50 µ m. The cathode mixed layer 21b is made of a cathode material capable of inserting and extracting lithium which is light metal with, for example, a thickness of 80 µm to 250 µm. Further, when the cathode mixed layer 21b is disposed on both sides of the cathode current collector 21a, the thickness of the cathode mixed layer 21b means the total thickness thereof.

As the cathode material capable of inserting and extracting lithium, for example, a lithium-containing compound such as a lithium oxide, a lithium sulfide, a intercalation compound including lithium or the like is adequate, and a mixture including two or more kinds selected from them may be used. More specifically, in order to achieve a higher energy density, a lithium complex oxide or an intercalation compound including lithium represented by a general formula LiₓMO₂ is preferable. In the formula, as M, one or more kinds of transition metals, more specifically at least one kind selected from the group consisting of cobalt (Co), nickel (Ni), manganese (Mn), iron (Fe), aluminum (Al), vanadium (V) and titanium (Ti) is preferable. The value of x depends upon a charge-discharge state of the battery, and is generally within a range of 0.05≦x≦1.10. In addition, LiMn₂O₄ having a spinel crystal structure, LiFePO₄ having an olivine crystal structure or the like is preferable, because a higher energy density can be obtained.

Further, such a cathode material is prepared through the following steps. For example, after a carbonate, a nitrate; an oxide or a hydroxide including lithium, and a carbonate, a nitrate, an oxide or a hydroxide including a transition metal are mixed so as to have a desired composition, and the mixture is pulverized, the pulverized mixture is fired at a temperature ranging from 600°C to 1000°C in an oxygen atmosphere, thereby the cathode material is prepared.

The cathode mixed layer 21b includes, for example, an electronic conductor, and may further include a binder, if necessary. As the electronic conductor, for example, a carbon material such as graphite, carbon black, ketjen black or the like is cited, and one kind or a mixture of two or more kinds selected from them is used. In addition to the carbon material, any metal material having conductivity, any electrically conductive high molecular weight material having conductivity or the like may be used. As the binder, for example, synthetic rubber such as styrene butadiene rubber, fluorine rubber, ethylene propylene diene rubber or the like, or a high molecular weight material such as polyvinylidene fluoride or the like is cited, and one kind or a mixture including two or more kinds selected from them is used. For example, as shown in FIG. 1, when the cathode 21 and the anode 22 are spirally wound, the styrene butadiene rubber, the fluorine rubber or the like having high elasticity is preferably used as the binder.

For example, when the anode 22 is disposed on the innermost circumference or the outermost circumference of the spirally wound body, the anode 22 has a structure in which an anode mixed layer 22b is disposed on both sides of an anode current collector 22a having a pair of surfaces facing each other except for an end portion with a length corresponding to at least one turn around the innermost circumference or. the outermost circumference of the spirally wound body. The anode current collector 22a is made of, for example, metal foil having excellent electrochemical stability, electrical conductivity and mechanical strength such as copper foil, nickel foil, stainless foil or the like. More specifically, the copper foil is the most preferable because the copper foil has high electrical conductivity. The anode current collector 22a preferably has a thickness of, for example, approximately 6 µ m to 40 µ m. When the thickness of the anode current collector 22a is thinner than 6 µ m, the mechanical strength declines, so the anode current collector 22a is easily broken during a manufacturing process, thereby production efficiency declines. On the other hand, when it is thicker than 40 µ m, a volume ratio of the anode current collector 22a in the battery becomes larger than necessary, so it is difficult to increase the energy density.

The anode mixed layer 22b includes one kind or two or more kinds selected from anode materials capable of inserting and extracting lithium which is light metal, and may further include, for example, the same binder as that included in the cathode mixed layer 21b, if necessary. The anode mixed layer 22b has a thickness of, for example, 80 µ m to 250 µ m. When the anode mixed layer 22b is disposed on both sides of the anode current collector 22a, the thickness of the anode mixed layer 22b means the total thickness thereof.

In this description, insertion and extraction of light metal mean that light metal ions are electrochemically inserted and extracted without losing their ionicity. It includes not only a case where inserted lithium metal exists in a perfect ion state but also a case where the inserted lithium metal exists in an imperfect ion state. As these cases, for example, insertion by electrochemical intercalation of light metal ions into graphite is cited. Further, insertion of the light metal by forming an intermetallic compound or an alloy can be cited.

As the anode material capable of inserting and extracting lithium, for example, a carbon material such as graphite, non-graphitizable carbon, graphitizing carbon or the like is cited. These carbon materials are preferable, because a change in the crystalline structure which occurs during charge and discharge is extremely small, so a higher charge-discharge capacity and superior charge-discharge cycle characteristics can be obtained. Further, graphite is more preferable, because a larger electrochemical equivalent and a higher energy density can be obtained.

For example, graphite with a true density of 2.10 g/cm³ or over is preferable, and graphite with a true density of 2.18 g/cm³ or over is more preferable. In order to obtain such a true density, a c-axis crystalline thickness of a (002) plane is required to be 14.0 nm or over. Moreover, the spacing of (002) planes is preferably less than 0.340 nm, and more preferably within a range from 0.335 nm to 0.337 nm.

The graphite may be natural graphite or artificial graphite. The artificial graphite can be obtained through the following steps, for example. An organic material is carbonized, and high-temperature heat treatment is carried out on the carbonized organic material, then the organic material is pulverized and classified so as to obtain the artificial graphite. The high-temperature treatment is carried out through the following steps. For example, the organic material is carbonized at 300°C to 700°C in an airflow of an inert gas such as nitrogen (N₂) or the like, if necessary, and then the temperature rises to 900°C to 1500°C at a rate of 1°C to 100°C per minute, and the temperature is kept for 0 to 30 hours to calcine the organic material, then the organic material is heated to 2000°C or over, preferably 2500°C or over, and the temperature is kept for an adequate time.

As the organic material as a starting material, coal or pitch can be used. As the pitch, for example, a material which can be obtained by distillation (vacuum distillation, atmospheric distillation or steam distillation), thermal polycondensation, extraction, and chemical polycondensation of tars which can be obtained by thermally cracking coal tar, ethylene bottom oil, crude oil or the like at high temperature, asphalt or the like, a material produced during destructive distillation of wood, a polyvinyl chloride resin, polyvinyl acetate, polyvinyl butyrate, or a 3,5-dimethylphenol resin is cited. These coals and pitches exist in a liquid state around at 400°C at the highest during carbonization, and by keeping the coals and pitches at the temperature, aromatic rings are condensed and polycycled, so the aromatic rings is aligned in a stacking arrangement. After that, a solid carbon precursor, that is, semi-coke is formed at approximately 500°C or over (liquid-phase carbonization process).

Moreover, as the organic material, a condensed polycyclic hydrocarbon compound such as naphthalene, phenanthrene, anthracene, triphenylene, pyrene, perylene, pentaphene, pentacene or the like, a derivative thereof (for example, carboxylic acid of the above compound, carboxylic acid anhydride, carboxylic acid imide), or a mixture thereof can be used. Further, a condensed heterocyclic compound such as acenaphthylene, indole, isoindole, quinoline, isoquinoline, quinoxaline, phthalazine, carbazole, acridine, phenazine, phenanthridine or the like, a derivative thereof, or a mixture thereof can be used.

In addition, pulverization may be carried out before or after carbonization and calcination, or during a rise in temperature before graphitization. In these cases, the material in powder form is heated for graphitization in the end. However, in order to obtain graphite powders with a higher bulk density and a higher fracture strength, it is preferable that after the material is molded, the molded material is heated, then the graphitized molded body is pulverized and classified.

For example, in order to form the graphitized molded body, after coke as a filler and binder pitch as a molding agent or a sintering agent are mixed and molded, a firing step in which the molded body is heated at a low temperature of 1000°C or less and a step of impregnating the fired body with the molten binder pitch are repeated several times, and then the body is heated at high temperature. The binder pitch with which the fired body is impregnated is carbonized by the above heat treatment process so as to be graphitized. In this case, the filler (coke) and the binder pitch are used as the materials, so they are graphitized as a polycrystal, and sulfur or nitrogen included in the materials is generated as a gas during the heat treatment, thereby a minute pore is formed in a path of the gas. Therefore, there are some advantages that insertion and extraction of lithium proceed more easily by the pore, and industrial processing efficiency is higher. Further, as the material of the molded body, a filler having moldability and sinterability may be used. In this case, the binder pitch is not required.

The non-graphitizable carbon having the spacing of the (002) planes of 0.37 nm or over and a true density of less than 1.70 g/cm³, and not showing an exothermic peak at 700°C or over in a differential thermal analysis (DTA) in air is preferable.

Such non-graphitizable carbon can be obtained, for example, through heating the organic material around at 1200°C, and pulverizing and classifying the material. Heat treatment is carried out through the following steps. After, if necessary, the material is carbonized at 300°C to 700°C (solid phase carbonization process), a temperature rises to 900°C to 1300°C at a rate of 1°C to 100°C per minute, and the temperature is kept for 0 to 30 hours. Pulverization may be carried out before or after carbonization or during a rise in temperature.

As the organic material as a starting material, for example, a polymer or a copolymer of furfuryl alcohol or furfural, or a furan resin which is a copolymer including macromolecules thereof and any other resin can be used. Moreover, a conjugated resin such as a phenolic resin, an acrylic resin, a vinyl halide resin, a polyimide resin, a polyamide imide resin, a polyamide resin, polyacetylene, polyparaphenylene or the like, cellulose or a derivative thereof, coffee beans, bamboos, crustacea including chitosan, kinds of bio-cellulose using bacteria can be used. Further, a compound in which a functional group including oxygen (O) is introduced into petroleum pitch with, for example, a ratio H/C of the number of atoms between hydrogen (H) and carbon (C) of from 0.6 to 0.8 (that is, an oxygen cross-linked compound) can be used.

The percentage of the oxygen content in the compound is preferably 3% or over, and more preferably 5% or over (refer to Japanese Unexamined Patent Application Publication No. Hei 3-252053). The percentage of the oxygen content has an influence upon the crystalline structure of a carbon material, and when the percentage is the above value or over, the physical properties of the non-graphitizable carbon can be improved, thereby the capacity of the anode 22 can be improved. Moreover, the petroleum pitch can be obtained, for example, by distillation (vacuum distillation, atmospheric distillation or steam distillation), thermal polycondensation, extraction, and chemical polycondensation of tars obtained through thermally cracking coal tar, ethylene bottom oil or crude oil at high temperature, asphalt or the like. Further, as a method of forming an oxygen cross-link, for example, a wet method of reacting a solution such as nitric acid, sulfuric acid, hypochlorous acid, a mixture thereof or the like and petroleum pitch, a dry method of reacting an oxidizing gas such as air, oxygen or the like and petroleum pitch, or a method of reacting a solid reagent such as sulfur, ammonium nitrate, ammonium persulfate, ferric chloride or the like and petroleum pitch can be used.

In addition, the organic material as the starting material is not limited to them, and any other organic material which can become non-graphitizable carbon through the solid-phase carbonization by an oxygen cross-linking process or the like may be used.

As the non-graphitizable carbon, in addition to the non-graphitizable carbon formed of the above organic material as a starting material, a compound including phosphorus (P), oxygen and carbon as main components which is disclosed in Japanese Unexamined Patent Application Publication No. Hei 3-137010 is preferable, because the above-described parameters of physical properties are exhibited.

As the anode material capable of inserting and extracting lithium, a metal or a semiconductor capable of forming an alloy or a compound with lithium, or an alloy of the metal or the semiconductor, or a compound of the metal or the semiconductor is cited. They are preferable because a higher energy density can be obtained, and it is more preferable to use them with a carbon material, because a higher energy density and superior cycle characteristics can be obtained.

As such a metal or such a semiconductor, for example, tin (Sn), lead (Pb), aluminum (Al), indium (In), silicon (Si), zinc (Zn), antimony (Sb), bismuth (Bi), gallium (Ga), germanium (Ge), arsenic (As), silver (Ag), hafnium (Hf), zirconium (Zr) and yttrium (Y) are cited. As an alloy or a compound thereof, for example, an alloy or a compound represented by a chemical formula MaₛMbₜLiᵤ or a chemical formula MaₚMc_{q}Mdᵣ is cited. In these chemical formulas, Ma represents at least one kind selected from metal elements and semiconductor elements which can form an alloy or a compound with lithium, Mb represents at least one kind selected from metal elements and semiconductor elements except for lithium and Ma, Mc represents at least one kind selected from nonmetal elements, and Md represents at least one kind selected from metal elements and semiconductor elements except for Ma. Further, the values of s, t, u, p, q and r are s>0, t≧0, u≧0, p>0, q>0 and r≧0, respectively.

Among them, a metal element or a semiconductor element selected from Group 4B, or an alloy thereof or a compound thereof is preferable, and silicon or tin, or an alloy thereof or a compound thereof is more preferable. They may have a crystalline structure or an amorphous structure.

As specific examples of such an alloy or such a compound, LiAl, AlSb, CuMgSb, SiB₄, SiB₆, Mg₂Si, Mg₂Sn, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0<v≦2), SnO_{w} (0<w≦2), SnSiO₃, LiSiO, LiSnO or the like is cited.

Moreover, as the anode material capable of inserting and extracting lithium, other metal compounds or high molecular weight materials are cited. As the other metal compounds, an oxide such as iron oxide, ruthenium oxide, molybdenum oxide, LiN₃ or the like is cited, and as the high molecular weight materials, polyacetylene, polyaniline, polypyrrole or the like is cited.

Moreover, in the secondary battery, during charge, precipitation of lithium metal on the anode 22 begins at a point where an open circuit voltage (that is, battery voltage at no load) is lower than an overcharge voltage. In other words, in a state where the open circuit voltage is lower than the overcharge voltage, the lithium metal is precipitated on the anode 22, so the capacity of the anode 22 can be presented by the sum of a capacity component by insertion and extraction of lithium and a capacity component by precipitation and dissolution of the lithium metal. Therefore, in the secondary battery, both of the anode material capable of inserting and extracting lithium and the lithium metal have a function as an anode active material, and the anode material capable of inserting and extracting lithium is a base material when the lithium metal is precipitated. The overcharge voltage means a open circuit voltage when the battery is overcharged, and indicates, for example, a voltage higher than the open circuit voltage of a battery "fully charged" described in and defined by "Guideline for safety assessment of lithium secondary batteries" (SBA G1101) which is one of guidelines drawn up by Japan Storage Battery industries Incorporated (Battery Association of Japan). In other words, the overcharge voltage indicates a higher voltage than an open circuit voltage after charge by using a charging method used when a nominal capacity of each battery is determined, a standard charging method or a recommended charging method. More specifically, the secondary battery is fully charged, for example, at a open circuit voltage of 4.2 V, and the lithium metal is precipitated on a surface of the anode material capable of inserting and extracting lithium in a part of the range of the open circuit voltage of from 0 V to 4.2 V.

Thereby, in the secondary battery, a higher energy density can be obtained, and cycle characteristics and high-speed charge characteristics can be improved, because of the following reason. The secondary battery is equivalent to a conventional lithium secondary battery using lithium metal or a lithium alloy for the anode in a sense that the lithium metal is precipitated on the anode. However, in the secondary battery, the lithium metal is precipitated on the anode material capable of inserting and extracting lithium, thereby it is considered that the secondary battery has the following advantages.

Firstly, in the conventional lithium secondary battery, it is difficult to uniformly precipitate the lithium metal, which causes degradation in cycle characteristics, however, the anode material capable of inserting and extracting lithium generally has a large surface area, so in the secondary battery, the lithium metal can be uniformly precipitated. Secondly, in the conventional lithium secondary battery, a change in volume according to precipitation and dissolution of the lithium metal is large, which also causes degradation in the cycle characteristics, however, in the secondary battery, the lithium metal is precipitated in gaps between particles of the anode material capable of inserting and extracting lithium, so a change in volume is small. Thirdly, in the conventional lithium secondary battery, the larger the amount of precipitation and dissolution of the lithium metal is, the bigger the above problem becomes, however, in the secondary battery, insertion and extraction of lithium by the anode material capable of inserting and extracting lithium contributes to a charge-discharge capacity, so in spite of a large battery capacity, the amount of precipitation and dissolution of the lithium metal is small. Fourthly, when the conventional lithium secondary battery is quickly charged, the lithium metal is more nonuniformly precipitated, so the cycle characteristics are further degraded. However, in the secondary battery, in an initial charge, lithium is inserted into the anode material capable of inserting and extracting lithium, so the secondary battery can be quickly charged.

In order to more effectively obtain these advantages, for example, it is preferable that at the maximum voltage before the open circuit voltage becomes an overcharge voltage, the maximum capacity of the lithium metal precipitated on the anode 22 is from 0.05 times to 3.0 times larger than the charge capacity of the anode material capable of inserting and extracting lithium. When the amount of the lithium metal precipitated is too large, the same problem as the problem which occurs in the conventional lithium secondary battery arises, and when the amount is too small, the charge-discharge capacity cannot be sufficiently increased. Moreover, for example, the discharge capacity of the anode material capable of inserting and extracting lithium is preferably 150 mAh/g or over. The larger the ability to insert and extract lithium is, the smaller the amount of the lithium metal precipitated relatively becomes. In addition, the charge capacity of the anode material is determined by the quantity of electricity when the battery with the anode made of the anode material as an anode active material and the lithium metal as a counter electrode is charged by a constant-current constant-voltage method until reaching 0 V. For example, the discharge capacity of the anode material is determined by the quantity of electricity when the battery is subsequently discharged 10 hours or more by a constant-current method until reaching 2.5 V.

The separator 23 is made of, for example, a porous film of a synthetic resin such as polytetrafluoroethylene, polypropylene, polyethylene or the like, or a porous film of ceramic, and the separator 23 may have a structure in which two or more kinds of the porous films are laminated. Among them, a porous film made of polyolefin is preferably used, because by use of the porous film, a short circuit can be effectively prevented, and the safety of the battery can be improved by a shutdown effect. More specifically, polyethylene can obtain a shutdown effect within a range of from 100°C to 160°C, and is superior in electrochemical stability, so polyethylene is preferably used as the material of the separator 23. Moreover, polypropylene is also preferably used, and any other resin having chemical stability can be used by copolymerizing or blending with polyethylene or polypropylene.

The porous film made of polyolefin is obtained through the following steps, for example. After a molten polyolefin composite is kneaded with a molten low-volatile solvent in liquid form to form a solution uniformly containing a high concentration of the polyolefin composite, the solution is extruded through a die, and is cooled to form a gel-form sheet, then the gel-form sheet is drawn to obtain the porous film.

As the low-volatile solvent, for example, a low-volatile aliphatic group such as nonane, decane, decaline, p-xylene, undecane, liquid paraffin or the like, or a cyclic hydrocarbon can be used. A composition ratio of the polyolefin composite and the low-volatile solvent is preferably 10 wt% to 80 wt% of the polyolefin composite, and more preferably 15 wt% to 70 wt% of the polyolefin composite, when the total ratio of the polyolefin composite and the low-volatile solvent is 100 wt%. When the composition ratio of the polyolefin composite is too small, during formation, swelling or neck-in becomes large at the exit of the die, so it is difficult to form the sheet. On the other hand, when the composition ratio of the polyolefin composite is too large, it is difficult to prepare a uniform solution.

When the solution containing a high concentration of the polyolefin composite is extruded through the die, in the case of a sheet die, a gap preferably has, for example, 0.1 mm to 5 mm. Moreover, it is preferable that an extrusion temperature is within a range of from 140°C to 250°C, and an extrusion speed is within a range of from 2 cm/minute to 30 cm/minute.

The solution is cooled to at least a gelling temperature or less. As a cooling method, a method of directly making the solution contact with cooling air, cooling water, or any other cooling medium, a method of making the solution contact with a roll cooled by a cooling medium or the like can be used. Moreover, the solution containing a high concentration of the polyolefin composite which is extruded from the die may be pulled before or during cooling at a pulling ratio of from 1 to 10, preferably from 1 to 5. It is not preferable to pull the solution at a too large pulling ratio, because neck-in becomes large, and a rupture tends to occur during drawing.

It is preferable that, for example, the gel-form sheet is heated, and then is biaxially drawn through a tenter process, a roll process, a rolling process, or a combination thereof. At this time, either simultaneous drawing in all direction or sequential drawing may be used, but simultaneous secondary drawing is preferable. The drawing temperature is preferably lower than a temperature of 10°C higher than the melting point of the polyolefin composite, and more preferably a crystal dispersion temperature or over and less than the melting point. A too high drawing temperature is not preferable, because effective molecular chain orientation by drawing cannot be achieved due to melting of the resin, and when the drawing temperature is too low, softening of the resin is insufficient, thereby a rupture of the gel-form sheet tends to occur during drawing, so the gel-form sheet cannot be drawn at a high enlargement ratio.

After drawing the gel-form sheet, the drawn film is preferably cleaned with a volatile solvent to remove the remaining low-volatile solvent. After cleaning, the drawn film is dried by heating or air blasting to volatilize the cleaning solvent. As the cleaning solvent, an easily volatile material, for example, a hydrocarbon such as pentane, hexane, heptane or the like, a chlorinated hydrocarbon such as methylene chloride, carbon tetrachloride or the like, a fluorocarbon such as trifluoroethane or the like, ether such as diethyl ether, dioxane or the like is used. The cleaning solvent is selected depending upon the used low-volatile solvent, and one kind selected from the cleaning solvents or a mixture thereof is used. A method of immersing in the volatile solvent to extract, a method of sprinkling the volatile solvent, or a combination thereof can be used for cleaning. Cleaning is performed until the remaining low-volatile solvent in the drawn film becomes less than 1 part by mass relative to 100 parts by mass of the polyolefin composite.

The separator 23 is impregnated with an electrolyte solution which is a liquid electrolyte. The electrolyte solution includes a liquid solvent, for example, a nonaqueous solvent such as an organic solvent or the like, and a lithium salt which is an electrolyte salt dissolved in the nonaqueous solvent. The liquid nonaqueous solvent is made of, for example, a nonaqueous compound with an intrinsic viscosity of 10.0 mPa•s or less at 25°C. As such a nonaqueous solvent, for example, one kind or a mixture of two or more kinds selected from materials typified by cyclic carbonate or chain carbonate is preferable.

More specifically, ethylene carbonate, propylene carbonate, butylene carbonate, vinylene carbonate, γ -butyrolactone, γ -valerolactone, 1,2-dimethoxyethane, tetrahydrofuran, 2-metyl tetrahydrofuran, 1,3-dioxolane, 4-methyl-1,3-dioxolane, methyl acetate, methyl propionate, dimethyl carbonate, ethyl methyl carbonate, diethyl carbonate, acetonitrile, glutaronitrile, adiponitrile, methoxyacetonitrile, 3-methoxypropylnitrile, N,N-dimetyl formamide, N-methyl pyrrolidinone, N-methyl oxazolidinone, N,N'-dimethylimidazolidinone, nitromethane, nitroethane, sulfolane, dimethyl sulfoxide, trimethyl phosphate, any of the above compounds in which a fluorine group is substituted for a part or all of a hydrogen group, or the like is cited. Specifically, in order to achieve superior charge-discharge capacity characteristics and charge-discharge cycle characteristics, at least one kind selected from the group consisting of ethylene carbonate, propylene carbonate, vinylene carbonate, dimethyl carbonate, ethyl methyl carbonate is preferably used.

As lithium salt, for example, LiAsF₆, LiPF₆, LiBF₄, LiClO₄, LiB(C₆H₅)₄, LiCH₃SO₃, LiCF₃SO₃, LiN(SO₂CF₃)₂, LiC(SO₂CF₃)₃, LiAlCl₄, LiSiF₆, LiCl, LiBr or the like is cited, and one kind or a mixture of two or more kinds selected from them is used. The content (concentration) of the lithium salt is preferably 3.0 mol/kg or less in the solvent, and more preferably 0.5 mol/kg or over in the solvent, because the ionic conductivity of the electrolyte solution can be increased within the range.

Moreover, instead of the electrolyte solution, a gel electrolyte in which a host high molecular weight compound holds an electrolyte solution may be used. Any gel electrode having an ionic conductivity of 1 mS/cm or over at room temperature may be used, and the composition of the gel electrode and the structure of the host high molecular weight compound are not specifically limited. The electrolyte solution (that is, the liquid solvent and the electrolyte salt) is as described above. As the host high molecular weight compound, for example, polyacrylonitrile, polyvinylidene fluoride, a copolymer of polyvinylidene fluoride and polyhexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene or polycarbonate is cited. Specifically, in point of electrochemical stability, a high molecular weight compound having the structure of polyacrylonitrile, polyvinylidene fluoride, polyhexafluoropropylene or polyethylene oxide is preferably used. An amount of the added host high molecular weight compound relative to the electrolyte solution varies depending upon compatibility between them, however, in general, an amount of the host high molecular weight compound equivalent to 5 wt% to 50 wt% of the electrolyte solution is preferably added.

Moreover, as in the case of the electrolyte solution, the content of the lithium salt is preferably 3.0 mol/kg or less in the solvent, and more specifically 0.5 mol/kg or over in the solvent. Herein, the solvent widely means not only a liquid solvent but also a material capable of dissociating the electrolyte salt and having ionic conductivity. Therefore, when a high molecular weight compound with ionic conductivity is used as the host high molecular weight compound, the host high molecular weight compound is considered as a solvent.

The secondary battery can be manufactured through the following steps, for example.

At first, for example, a cathode material capable of inserting and extracting lithium, an electronic conductor, and a binder are mixed to prepare a cathode mixture, and the cathode mixture is dispersed in a solvent such as N-methyl-2-pyrrolidone or the like to produce cathode mixture slurry in paste form. After the cathode mixture slurry is applied to the cathode current collector 21a, and the solvent is dried, the cathode mixed layer 21b is formed through compression molding by a roller press or the like so as to form the cathode 21.

Next, for example, an anode material capable of inserting and extracting lithium and a binder are mixed to prepare an anode mixture, then the anode mixture is dispersed in a solvent such as N-methyl-2-pyrrolidone or the like to produce anode mixture slurry in paste form. After the anode mixture slurry is applied to the anode current collector 22a, and the solvent is dried, the anode mixed layer 22b is formed through compression molding by a roller press or the like so as to form the anode 22.

Then, the cathode lead 25 is attached to the cathode current collector 21a by welding or the like, and the anode lead 26 is attached to the anode current collector 22a by welding or the like. After that, for example, a laminate including the cathode 21 and the anode 22 with the separator 23 in between is spirally wound, and an end portion of the cathode lead 25 is welded to the safety valve mechanism 15, and an end portion of the anode lead 26 is welded to the battery can 11. Then, the spirally wound laminate including the cathode 21 and the anode 22 is sandwiched between a pair of insulating plates 12 and 13, and is contained in the battery can 11. After the spirally wound laminate including the cathode 21 and the anode 22 is contained in the battery can 11, the electrolyte is injected into the battery can 11, and the separator 23 is impregnated with the electrolyte. After that, the battery cover 14, the safety valve mechanism 15 and the PTC device 16 are fixed in an opened end portion of the battery can 11 through caulking by the gasket 17. Thereby, the secondary battery shown in FIG. 1 is formed.

The secondary battery electrochemically works as follows.

In the secondary battery, when charge is carried out, lithium ions are extracted from the cathode mixed layer 21b, and are inserted into the anode material capable of inserting and extracting lithium included in the anode mixed layer 22b through the electrolyte solution with which the separator 23 is impregnated. When the charge further continues, in a state where the open circuit voltage is lower than the overcharge voltage, the charge capacity exceeds the charge capacity of the anode material capable of inserting and extracting lithium, and then lithium metal begins to be precipitated on the surface of the anode material capable of inserting and extracting lithium. After that, until the charge is completed, precipitation of lithium metal on the anode 22 continues. Thereby, for example, when a carbon material is used as the anode material capable of inserting and extracting lithium, the color of the surface of the anode mixed layer 22b changes from black to gold, and then to silver.

Next, when discharge is carried out, at first, the lithium metal precipitated on the anode 22 is eluted as ions, and is inserted into the cathode mixed layer 21b through the electrolyte solution with which the separator 23 is impregnated. When the discharge further continues, lithium ions inserted into the anode material capable of inserting and extracting lithium in the anode mixed layer 22b are extracted, and are inserted into the cathode mixed layer 21b through the electrolyte solution. Therefore, as electrochemical characteristics, the secondary battery can obtain the characteristics of the conventional lithium secondary battery and the lithium-ion secondary battery, that is, a higher energy density than that of the conventional lithium ion battery and superior charge-discharge cycle characteristics.

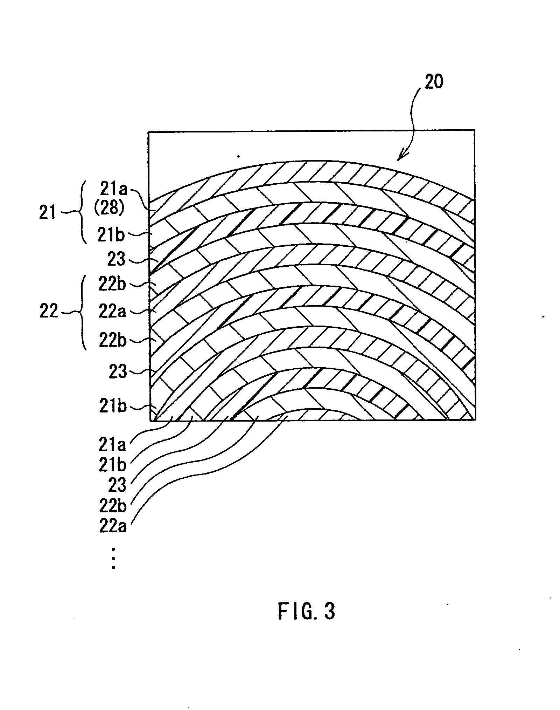

Specifically, in the embodiment, as schematically shown in FIG. 3, the cathode current collector 21a has a portion with a surface not covered with the cathode mixed layer (a cathode active material layer or a laminate including a cathode active material layer an a solid electrolyte layer) 21b so as to be exposed on an outer circumferential side, and the portion of the cathode current collector 21a is disposed in a position corresponding to one turn around the outermost circumference of the spirally wound electrode body 20. Thereby, a portion not substantially contributing to the occurrence of an electrochemical electromotive force which is disposed closer to the outermost circumference of the spirally wound electrode body 20 than an outermost circumferential portion of the cathode current collector 21a (that is, an outermost circumferential portion of the cathode mixed layer in the conventional battery) is removed, so a further improvement in the volume energy density or the weight energy density of the whole battery can be achieved. Moreover, when a battery temperature rises due to a short circuit, overdischarge or the like in the battery or resulting from external application of dynamic pressure or any other damage, at least one turn of the portion of the cathode current collector 21a with at least a surface not covered with the cathode mixed layer 21b on the outer circumferential side is wound around the outermost circumference of the spirally wound electrode body 20, so heat generated due to a short circuit or overdischarge is effectively absorbed or dispersed to the outside by the surface of the portion of the cathode current collector 21a, thereby thermal runaway of the battery or the like can be prevented. Further, the outermost circumference of the spirally wound electrode body 20 is covered with the portion of the cathode current collector 21a, so a laminate structure, which is a main structural portion of the spirally wound electrode body 20 substantially contributing to an electromotive force, in a position closer to an inner circumferential side than the outermost circumferential portion of the cathode current collector 21a can be protected from a dynamic impulsive force, thermal shock or the like applied from the outside of the battery.

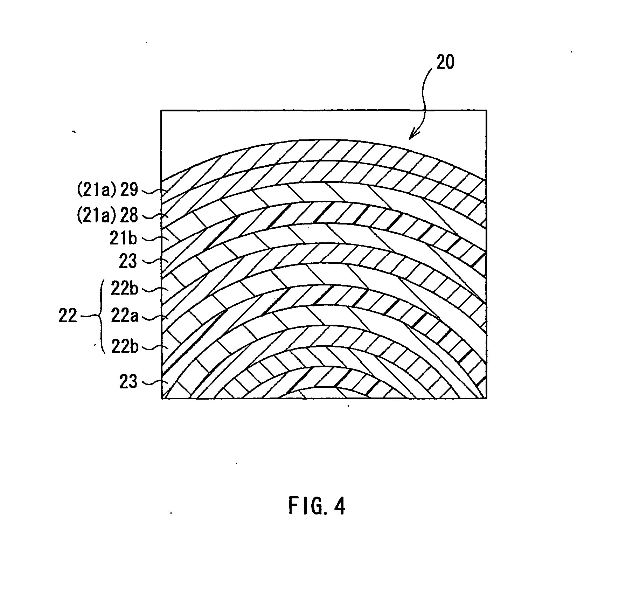

Moreover, as schematically shown in FIG. 4, when approximately two turns of a portion of the cathode current collector 21a not covered with the cathode mixed layer 21b are wound around the outermost circumference of the spirally wound electrode body 20, the total volume of an outermost portion of the cathode current collector 21a with both surfaces exposed (a double-sided exposed portion 29) and a portion of the cathode current collector 21a with one surface exposed (a single-sided exposed portion 28) disposed one layer inside the outermost portion is twice as large as that of the portion of the cathode current collector 21a with one exposed surface as shown in FIG. 3 in the case where one turn of the portion of the cathode current collector 21a is wound around the outermost circumference of the spirally wound electrode body 20, so by the two turns including the portions of the cathode current collector 21a, heat generated due to a short circuit or overdischarge can be effectively absorbed or dispersed to outside, thereby thermal runaway of the battery or the like can be prevented. Further, by the two turns including the portions of the cathode current collector 21a, a laminate structure, which is a main structural portion of the spirally wound electrode body 20 substantially contributing to an electromotive force, in a position closer to the inner circumferential side than the two turns can be protected from a dynamic impulsive force, thermal shock or the like applied from the outside of the battery. When the outermost circumference of such a spirally wound electrode body 20 is covered with a plurality of turns of the double-sided exposed portion 29 of the cathode current collector 21a, such effects can be more reliably achieved. However, too many turns wound around the outermost circumference of the spirally wound electrode body 20 may interfere with a further improvement in the volume energy density or the weight energy density of the whole battery.

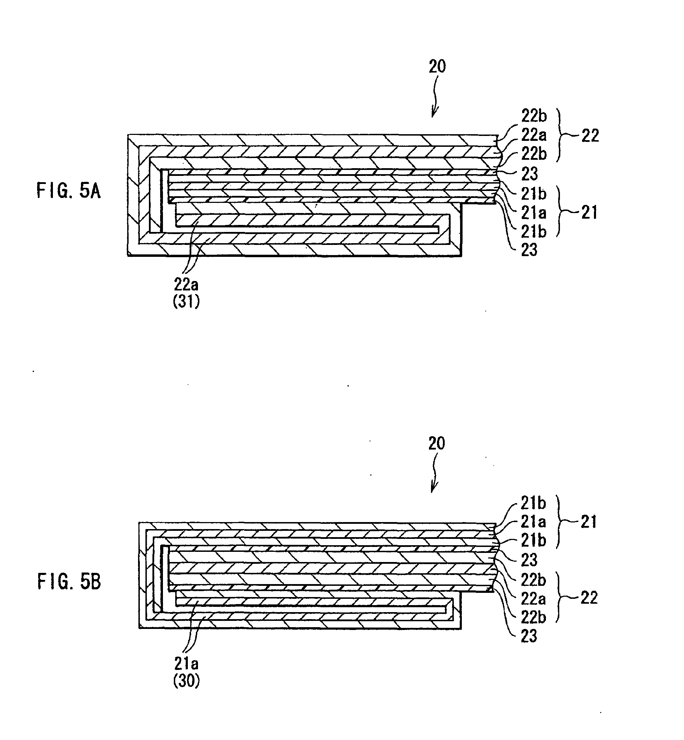

In the case of the thin (prismatic) battery, as an inner circumferential portion of a spirally wound electrode body is schematically shown in FIG. 5A, the thin (prismatic) battery may have a structure in which the anode current collector 22a has a single-sided exposed portion 31 with a surface not covered with the anode mixed layer (anode active material layer) 22b on an innermost circumference of the spirally wound electrode body 20 so that the surface is exposed on a inner circumferential side. Alternatively, as shown in FIG. 5B, the battery may have a structure in which the cathode current collector 21a has a single-sided exposed portion 30 with a surface not covered with the cathode mixed layer (cathode active material layer) 21b on the innermost circumference of the spirally wound electrode body 20 so that the surface is exposed on the inner circumferential side. Thereby, a portion not substantially contributing to the occurrence of an electrochemical electromotive force in a position closer to the inner circumferential side than the anode current collector 22a or the cathode current collector 21a (that is, an innermost portion of the anode mixed layer or an innermost portion of the cathode mixed layer in the conventional battery) is removed, so a further improvement in the volume energy density or the weight energy density of the whole battery can be achieved. Specifically, in such a thin battery, the outside shape of the battery or the spirally wound electrode body 20 in the battery is thin, so even if only one layer of the innermost portion of the anode mixed layer 22b or the cathode mixed layer 21b in the conventional battery is removed, an effect of improving the volume energy density or the weight energy becomes more remarkable than in the case of a so-called cylindrical battery. Moreover, in addition to an improvement in such an energy density, an effect of preventing thermal runaway of the battery or the like by effectively absorbing or dispersing heat generated due to a short circuit or overdischarge becomes more remarkable. In FIGs. 5A and 5B, the structure of the spirally wound electrode body on the outer circumferential side is not shown. In order to easily show the structure of the spirally wound electrode body 20, a gap is disposed in the innermost circumference of the spirally wound electrode body 20 in FIGs. 5A and 5B, however, in practice, the spirally wound electrode body 20 may be tightly wound until one side of a surface of the single-sided exposed portion 31 or 30 facing the innermost circumference makes contact with the other side of the surface so as to reduce the volume of the spirally wound electrode body 20.

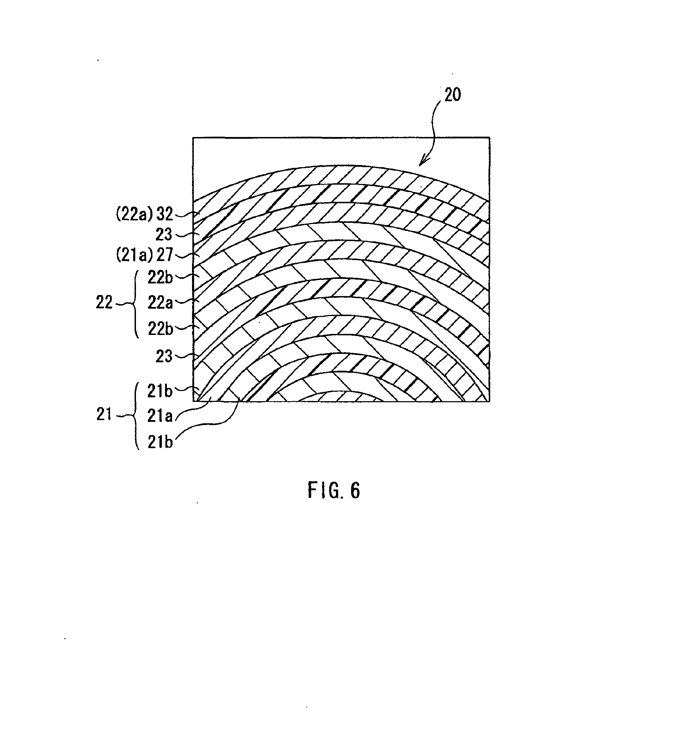

Moreover as schematically shown in FIG. 6, the outermost circumference of the spirally wound electrode body 20 is covered with one or more turns of a laminate including a double-sided exposed portion 32 of the anode current collector 22a with both surfaces not covered with the anode mixed layer 22b and the double-sided exposed portion 27 of the cathode current collector 21a with the both surfaces not covered with the cathode mixed layer 21b with the separator 23 in between, thereby thermal runway of the battery or the like can be prevented by absorbing or dispersing heat generated due to a short circuit or overdischarge in the battery. Moreover, a laminate structure which is a main structural portion of the spirally wound electrode body 20 substantially contributing to an electromotive force in a position closer to the inner circumferential side than an outermost circumferential portion including the double-sided exposed portion 27 of the cathode current collector 21a and the double-sided exposed portion 32 of the anode current collector 22a can be protected from dynamic shock, thermal shock or the like applied from the outside of the battery. Further, in a state where a short circuit in the battery occurs due to, for example, external application of dynamic pressure or any other damage, a short circuit occurs in the outermost portion including the double-sided exposed portion 27 of the cathode current collector 21a and the double-sided exposed portion 32 of the anode current collector 22a at first as a victim, so the occurrence of a short circuit or heat generation in the laminate structure, which is the main structural portion of the spirally wound electrode body 20 substantially contributing to an electromotive force, in a position closer to the inner circumferential side than the outermost portion can be prevented.

The cathode 21 and the anode 22 having the following structure are used for the spirally wound electrode body 20 according to the embodiment.

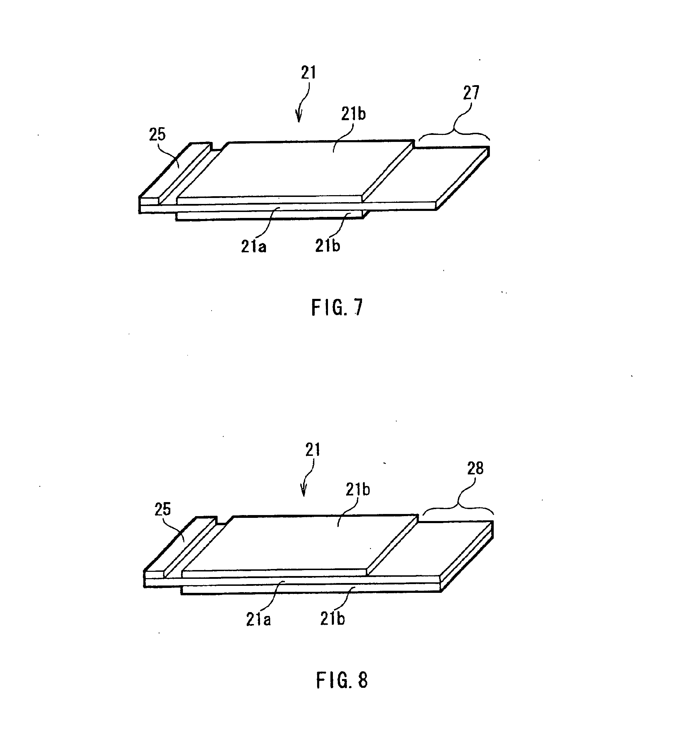

As shown in FIG. 7, the cathode 21 has the double-sided exposed portion 27 at an end of the strip-shaped cathode current collector 21a in a longitudinal direction. The double-sided exposed portion 27 has both surfaces not covered with the cathode mixed layer 21b, so the both surfaces are exposed. In this case, when the cathode current collector 21a is spirally wound together with the anode current collector 22a and so on to form the spirally wound electrode body 20, the outmost circumference of the spirally wound electrode body 20 is covered with one or more turns of the double-sided exposed portion 27.

Alternatively, as shown in FIG. 8, the cathode 21 has the single-sided exposed portion 28 at the end of the strip-shaped cathode current collector 21a in a longitudinal direction. The single-sided exposed portion 28 has only one surface not covered with the cathode mixed layer 21b, so the surface is exposed. In this case, when the cathode current collector 21a is spirally wound together with the anode current collector 22a and so on to form the spirally wound electrode body 20, the single-sided exposed portion 28 is exposed on the outermost circumferential side of the spirally wound electrode body 20 so as to form the spirally wound electrode body 20 with a structure shown in FIG. 3.

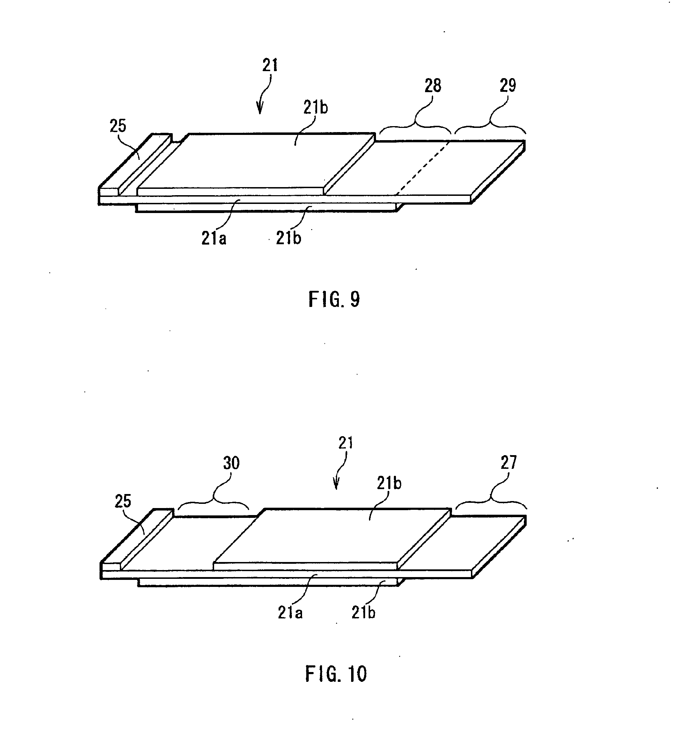

Moreover, as shown in FIG. 9, in the case where the cathode current collector 21a is spirally wound the single-sided exposed portion 28, the double-sided exposed portion 29, which has as long a length as one or more turns of the double-sided exposed portion 29 can be wound around the outer circumference of the single-sided exposed portion 28 (that is, the outermost circumference of the spirally wound electrode body 20) is disposed at an external end of the single-sided exposed portion 28, and the cathode current collector 21a is spirally wound together with the anode current collector 22a and so on to form the spirally wound electrode body 20 with a structure in which two turns including the single-sided exposed portion 28 and the double-sided exposed portion 29 without the cathode mixed layer 21b in between are spirally wound around the outermost circumference of the spirally wound electrode body 20, as shown in FIG. 4 as an example.

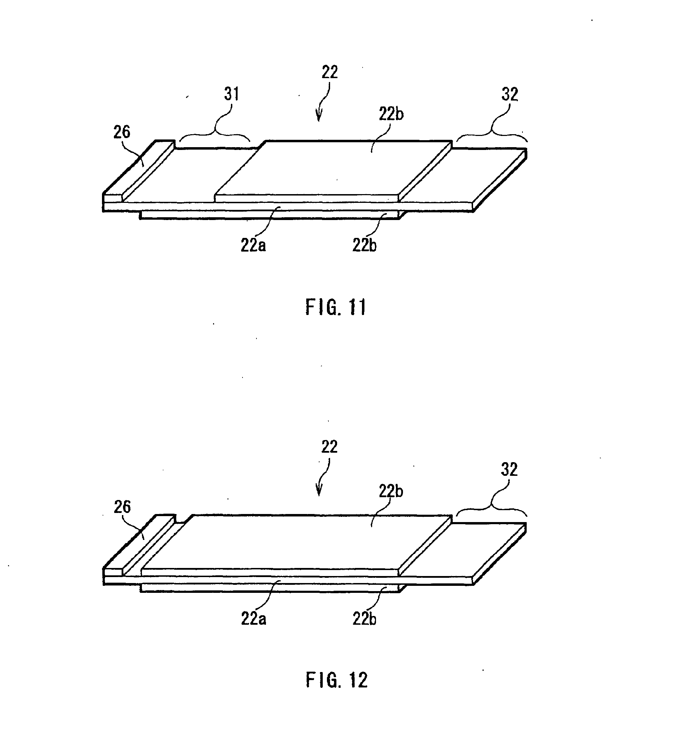

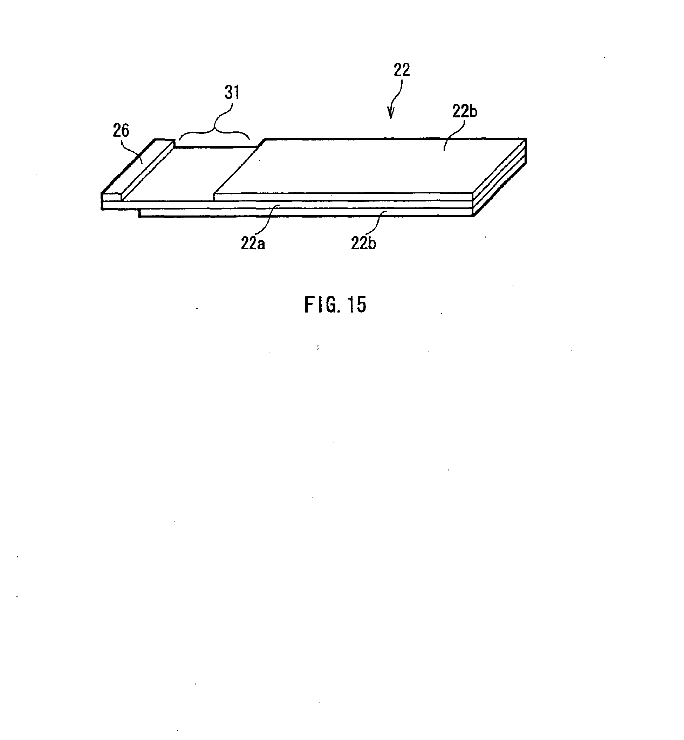

Further, as shown in FIG. 10, the double-sided exposed portion 27 is disposed at an end of the cathode current collector 21a in a position corresponding to the outermost circumference of the spirally wound electrode body 20 when the cathode current collector 21a is spirally wound, and the single-sided exposed portion 30 is disposed at the other end of the cathode current collector 21a in a position corresponding to the innermost circumference of the spirally wound electrode body 20, and the cathode current collector 21a is spirally wound (or folded) to form the spirally wound electrode body 20 with a structure in which the cathode mixed layer 21b is not applied to an innermost portion and an outermost portion of the cathode current collector 21a so that surfaces of the innermost portion and the outermost portion of the cathode current collector 21a are exposed on the innermost circumference and the outermost circumference of the spirally wound electrode body 20, respectively. Specifically in the case of the thin (prismatic) battery, the single-sided exposed portion 30 is disposed at an end on a side corresponding to the innermost circumference, thereby the spirally wound electrode body 20 with a structure shown in FIG. 5B can be formed. Moreover, in the case of the cylindrical battery, when the spirally wound electrode body 20 is formed in practice, the innermost circumferential portion of the spirally wound electrode body 20 which is spirally wound at first often has a folded structure as shown in the innermost circumferential portion of the spirally wound electrode body 20 of FIG. 5B, so it is effective to have the single-sided exposed portion 30 in an innermost circumferential portion of the cylindrical battery. In other words, even if the cathode mixed layer 21b is applied to such an innermost circumferential surface, the cathode mixed layer 21b does not substantially contribute to an electromotive force, so when the unnecessary cathode mixed layer 21b in the portion is removed, the energy density of the whole battery can be improved. Further, the absorption or the dispersion of heat from the inside of the battery can be accelerated by the single-sided exposed portion 30. In the spirally wound electrode body 20 in which the cathode 21 and the anode 22 is laminated with the separator 23 in between, in general, in the case of the structure in which the double-sided exposed portion 27 or the single-sided exposed portion 28 of the cathode current collector 21a is exposed on the outermost circumference, the anode current collector 22a is disposed in a position corresponding to the innermost circumference of the spirally wound electrode body 20. Therefore, in such a case, as shown in FIG. 15, the single-sided exposed portion 31 may be disposed in an end portion of the anode current collector 22a corresponding to one turn around the innermost circumference of the spirally wound electrode body 20. Alternatively, the anode 22 with a structure shown in FIG. 11 in which the double-sided exposed portion 32 is disposed in an end portion of the anode current collector 22a corresponding to one turn around the outermost circumference of the spirally wound electrode body 20 may be used.

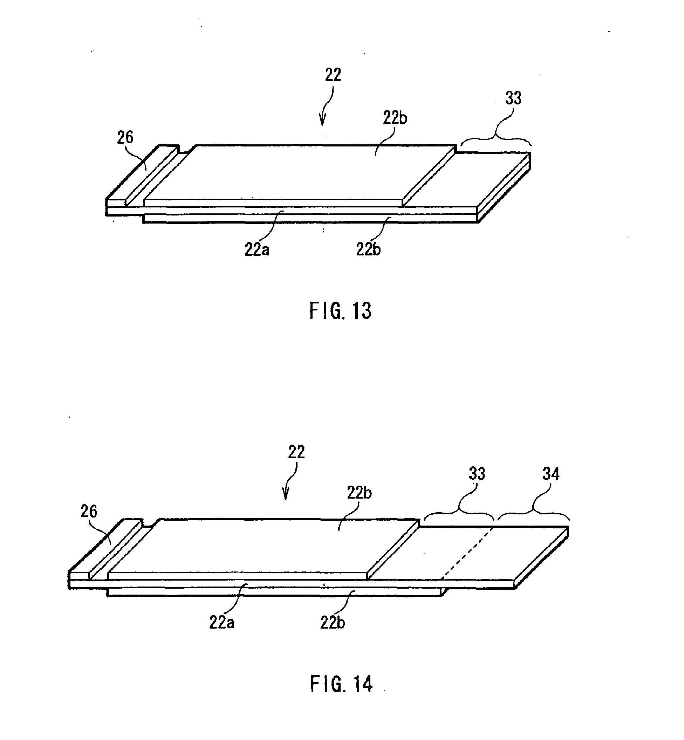

In the case where the anode 22 is disposed in the outermost circumference, as shown in FIG. 12, when the double-sided exposed portion 32 is disposed in a portion of the anode current collector 22a corresponding to one turn of the outermost circumference, the same effects as in the case where the cathode 21 is disposed in the outermost circumference as shown in FIG. 7 can be obtained. Alternatively, as shown in FIG. 13, when a single-sided exposed portion 33 is disposed in a portion of the anode current collector 22a corresponding to one turn around the outermost circumference, the same effects as in the case where the cathode 21 is disposed in the outermost circumference as shown in FIG. 8 can be obtained. Further, as shown in FIG. 14, when the anode current collector 22a is spirally wound around the single-sided exposed portion 33, the double-sided exposed portion 34 which has as long a length as one or more turns of the double-sided exposed portion 34 can be wound around the outer circumference of the single-sided exposed portion 33 is disposed at an external end of the single-sided exposed portion 33 of the anode current collector 22a. Thereby, the same effects as in the case where the cathode 21 is disposed in the outermost circumference as shown in FIG. 9 can be obtained.

Next, specific examples of the invention will be described in detail referring to FIG. 1.

### (Examples 1 through 5)

At first, lithium carbonate (Li₂CO₃) and cobalt carbonate (CoCO₃) were mixed at a ratio (molar ratio) of Li₂CO₃:CoCO₃=0.5:1, and the mixture was fired in air at 900°C for 5 hours to obtain lithium cobalt complex oxide (LiCoO₂). When the X-ray diffraction of the obtained lithium cobalt complex oxide was measured, the diffraction pattern closely matched a peak of LiCoO₂ listed in the JCPDS file. Next, the lithium cobalt complex oxide was pulverized into the form of a powder with a particle diameter of 15 µ m at 50% cumulative size to form a cathode material.

Next, 95 wt% of lithium cobalt complex oxide powder and 5 wt% of lithium carbonate powder were mixed to prepare a mixture, and then the 94 wt% of the mixture, 3 wt% of amorphous carbon powder as a electronic conductor and 3 wt% of polyvinylidene fluoride as a binder were mixed to prepare a cathode mixture. After the cathode mixture was prepared, the cathode mixture was dispersed in N-methyl pyrrolidone as a solvent to produce cathode mixture slurry. After the cathode mixture slurry was uniformly applied to both sides of the cathode current collector 21a made of strip-shaped aluminum foil with a thickness of 20 µm, and was dried, the cathode mixed layer 21b was formed through compression molding by a roller press so as to form the cathode 21 with a thickness of 174 µm. After that, the cathode lead 25 made of aluminum was attached to an end of the cathode current collector 21a.

Moreover, 90 wt% of granular artificial graphite powder and 10 wt% of polyvinyliden fluoride as a binder were mixed to prepare an anode mixture. Next, the anode mixture was dispersed in N-methyl pyrrolidone as a solvent to produce anode mixture slurry. After the anode mixture slurry was uniformly applied to both sides of the anode current collector 22a made of strip-shaped copper foil with a thickness of 15 µ m, and was dried, the anode mixed layer 22b was formed through compression molding by a roller press so as to form the anode with a thickness of 130 µ m. Next, the anode lead 26 made of nickel was attached to an end of the anode current collector 22a.

After the cathode 21 and the anode 22 were formed, the separator 23 made of a stretched microporous polyethylene film with a thickness of 25 µm was prepared, the anode 22, the separator 23, the cathode 21 and the separator 23 were laminated in order to form a laminate, and the laminate was spirally wound many times to form the spirally wound electrode body 20 with an outside diameter of 12.5 mm.

After the spirally wound electrode body 20 was formed, the spirally wound electrode body 20 was sandwiched between a pair of insulating plates 12 and 13, and the anode lead 26 was welded to the battery can 11, and the cathode lead 25 was welded to the safety valve mechanism 15. Then the spirally wound electrode body 20 was contained in the battery can 11 made of nickel-plated iron. After that, the electrolyte solution was injected into the battery can 11 by a decompression system. As the electrolyte solution, a solvent formed of a mixture of ethylene carbonate and dimethyl carbonate in which a LiPF₆ content of 1 ml/dm³ as electrolyte salt was dissolved was used. The amount of the electrolyte solution injected was 3.0 g.

After the electrolyte solution was injected into the battery can 11, the battery cover 14 was caulked into the battery can 11 by the gasket 17 whose surface was coated with asphalt so as to obtain the jelly roll type secondary batteries of Examples 1 through 5 with a diameter of 14 mm and a height of 65 mm.

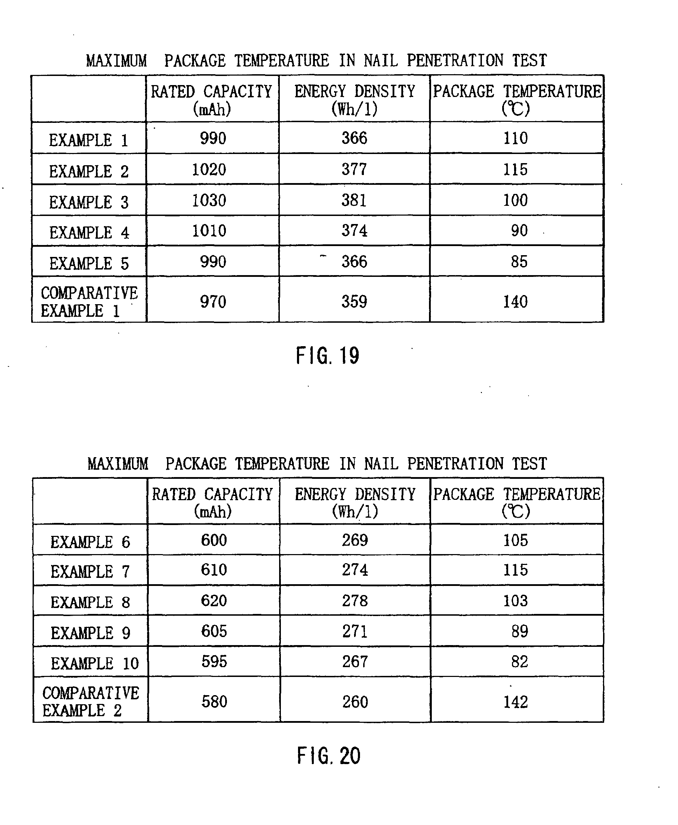

The rated capacity of each battery obtained through the above steps was measured. Further, the energy density of each battery was calculated from the rated capacity and the volume of the battery. The rated capacity was measured under charge-discharge conditions in which CCCV charge was carried out until reaching 4.2 V at 200 mA, and discharge was carried out until reaching 3.0 V at 200 mA. It was presumed that in each battery, when the battery was crushed by the external application of pressure or the like, a short circuit between the cathode and anode in the battery would occur, thereby resulting in heat generation, and further heat generated due to the short circuit would cause smoking. Therefore, a safety test against such crush or the like was also carried out. More specifically, the battery to be tested was charged at a constant current under a current condition of 0.2 C, and after reaching 4.4 V which was an abnormal voltage, the battery was charged at a constant voltage until the current reached a predetermined value, then the charge was cut off. The safety test against crush was carried out the following steps. After a fully charged battery was placed on a heat insulator, a nail which was made of iron and had a main stem portion with a diameter of 5 mm was vertically driven into the battery until a short circuit occurred in the battery, and then a highest temperature of the battery after the occurrence of the short circuit was measured. In the test, all safety devices such as a PTC were removed, so the test was carried out in a state of so-called bare batteries. The test was carried out on all examples and comparative examples described below. The number n of batteries tested per example was set to be 5. The measured values of the rated capacity, the energy density and the package temperature in each example shown in FIG. 19 were the average values of the five batteries.

### (Example 1)

In Exmaple 1, the cathode 21 had the double-sided exposed portion 27 as shown in FIG. 7, and the anode 22 had the double-sided exposed portion 32 as shown in FIG. 12, and a laminate including the cathode 21 and the anode 22 with the separator 23 in between was spirally wound to form the spirally wound electrode body 20 as shown in FIG. 6. As a result, as shown in FIG. 19, the rated capacity was 990 mAh, and the energy density was 366 Wh/l, and the package temperature was 110°C.

### (Example 2)

In Example 2, the spirally wound electrode body 20 was formed as in the case of Example 1, except that the cathode 21 had the single-sided exposed portion 28 as shown in FIG. 8, and a laminate including the cathode 21 and the anode 22 shown in FIG. 12 with the separator 23 in between was spirally wound so that a surface of the single-sided exposed portion 28 of the cathode 21 was exposed on the outermost circumference. As a result, as shown in FIG. 19, the rated capacity was 1020 mAh, and the energy density was 377 Wh/l, and the package temperature was 115°C.

### (Example 3)

In Example 3, as in the case of Example 1, the spirally wound electrode body 20 with a structure shown in FIG. 3 was formed, except that the cathode 21 had the single-sided exposed portion 28 shown in FIG. 8, and the anode 22 had the single-sided exposed portion 31 as shown in FIG. 15 in a position corresponding to the innermost circumference, and a laminate including the cathode 21 and the anode 22 with the separator 23 in between was spirally wound so that a surface of the single-sided exposed portion 28 of the cathode 21 was exposed on the outermost circumference. As a result, as shown in FIG. 19, the rated capacity was 1030 mAh, and the energy density was 381 Wh/l, and the package temperature was 100°C.

### (Example 4)

In Example 4, as in the case of Example 1, the spirally wound electrode body 20 with a structure shown in FIG. 4 was formed, except that the cathode 21 had the single-sided exposed portion 28 and the double-sided exposed portion 29 as shown in FIG. 9, and the anode 22 had the single-sided exposed portion 31 in an end corresponding to the innermost circumference as shown in FIG. 15, and a laminate including the cathode 21 and the anode 22 with the separator 23 was spirally wound so that one turn of the double-sided exposed portion 29 of the cathode 21 was wound around the outermost circumferences so that a surface of the double-sided exposed portion 29 was exposed on the outermost circumference. As a result, as shown in FIG. 19, the rated capacity was 1010 mAh, and the energy density was 374 Wh/l, and the package temperature was 90°C.

### (Example 5)

In Example 5, as in the case of Example 1, the spirally wound electrode body 20 was formed, except that the cathode 21 had the single-sided exposed portion 28 and the double-sided exposed portion 29 as shown in FIG. 9, and the anode 22 had the double-sided exposed portion 32 in a position corresponding to one turn around the outermost circumference and the single-sided exposed portion 31 in a position corresponding to one turn around the innermost circumference as shown in FIG. 11, and a laminate including the cathode 21 and the anode 22 with the separator in between was spirally wound so that one turn of the double-sided exposed portion 29 was wound around the outermost circumference, and a surface of the double-sided exposed portion 29 of the cathode 21 was exposed on the outermost circumference. As a result, as shown in FIG. 19, the rated capacity was 990 mAh, and the energy density was 366 Wh/l, and the package temperature was 85°C.

### (Comparative Example 1)

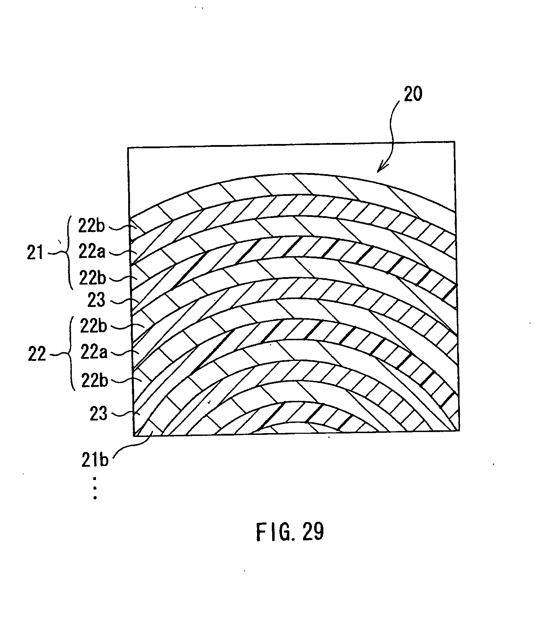

As Comparative Example 1, a spirally wound electrode body shown in FIG. 29 with a structure using a conventional and typical solidly coated electrode in which no exposed portion is disposed on a surface of a current collector made of metal foil was formed, and by using the spirally wound electrode body, a battery having the same electrochemical characteristics as those of the above examples and a different structure from the above examples was formed. Then the same test as in the case of the above examples was carried out on the battery. As a result, as shown in FIG. 19, the rated capacity was 970 mAh, and the energy density was 359 Wh/l, and the package temperature was 140°C.

To sum up the results of Examples 1 through 5 and Comparative Example 1, the rated capacity and the energy density in each of Examples 1 through 5 were higher than those in Comparative Example 1, and the package temperature of each of Examples 1 through 5 was lower than that in Comparative Example 1. It was considered that the reason why the rated capacity varied in Examples 1 through 5 and Comparative Example 1 was that the length which could be contained in the package (battery can) varied depending upon the structure of the cathode 21 or the anode 22. Moreover, it was considered that as a portion not substantially contributing to an electrochemical electromotive force in the battery was removed, the energy density of the battery in each of Examples 1 through 5 was improved more than the energy density of the battery in Comparative Example 1. Further, it was considered that the energy density in Example 5 was lower among Examples 1 through 5, because the double-sided exposed portion 29 of the cathode current collector 21a not directly contributing to an electrochemical electromotive force was wound around the outermost circumference. On the other hand, the package temperature of Example 5 was 85°C, which was obviously kept at a lower temperature, compared to other examples, because it was considered that the outermost circumference was covered with the double-sided exposed portion 29 of the cathode current collector 21a, so heat generated in the battery was absorbed or dispersed in the portion. As the results of Examples 1 through 5 and Comparative Example 1, it was confirmed that in the battery according to the embodiment, a further improvement in the energy density could be achieved, and even if heat was generated in the battery resulting from an abnormally high battery voltage or the occurrence of a short circuit, the safety of the battery could be secured.

Next, solid electrolyte batteries of Examples 6 through 10 were formed, and as in the case of Examples 1 through 5, the rated capacity of each of the batteries was measured, and the energy density of each of the batteries was calculated by the rated capacity and the volume. Moreover, as in the case of Examples 1 through 5, the safety test against crush was carried out on each of the batteries.

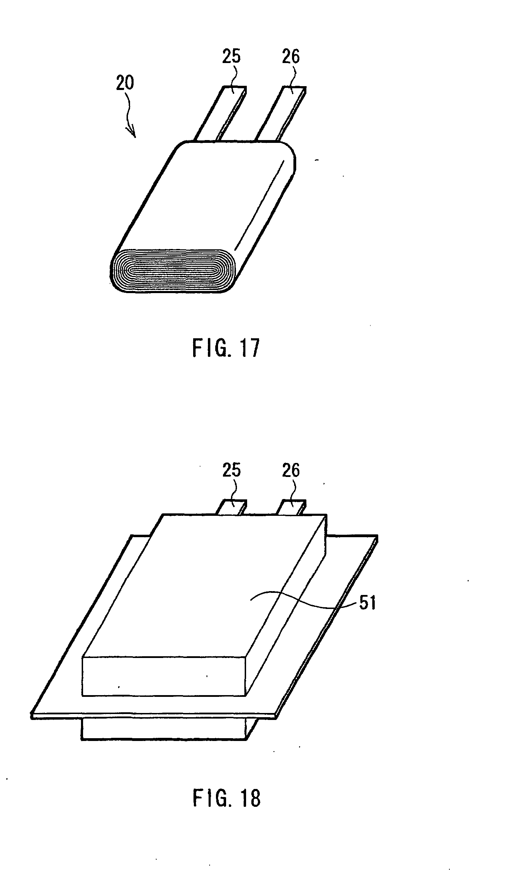

More specifically, the cathode 21 made of the same material as in the case of Examples 1 through 5 with a thickness of 20 µ m and a width of 49 mm and the anode 22 made of the same material as in the case of Examples 1 through 5 with a thickness of 20 µ m and a width of 51 mm were used. The solid electrolyte was applied to the cathode 21 or the anode 22 through the following steps. Polyvinylidene fluoride, ethylene carbonate which was an aprotic solvent, propylene carbonate, dimethyl carbonate and LiPF₆ which was lithium salt were mixed at a ratio of 5.8 wt%, 25.8 wt%, 17.2 wt%, 47.3 wt% and 3.9 wt%, respectively, and while keeping the mixture at a temperature of 80°C, the mixture was stirred to obtain a sol solution. The mixture solution in a liquid form was applied to the cathode 21 or the anode 22 by using a doctor blade, and the solution was dried for three minutes in a constant temperature bath at 35°C, thereby a solid electrolyte layer 40 with a thickness of 10 µ m was disposed on each of the cathode 21 and the anode 22. Then, the cathode lead 25 and the anode lead 26 both of which were made of metal foil or a mesh-shaped metal plate were welded to a laminate including the cathode 21 and the anode 22 with the separator 23 in between, the laminate was spirally wound and folded to form the spirally wound electrode body 20 with a size of 30 mm × 53 mm × 5 mm for a thin battery as shown in FIG. 17. The separator 23 may be removed depending upon electrochemical characteristics of the solid electrolyte layer 40. The spirally wound electrode body 20 formed through the above steps was contained in a moisture-proof package 51 formed through molding a packaging material made of a laminate including a high molecular film and metal foil so as to obtain a thin solid electrolyte battery shown in FIG. 18. The same test as in the case of Examples 1 through 5 was carried out on the batteries of Examples 6 through 10. In Examples 6 through 10, the solid electrolyte layer was disposed on the cathode 21 or the anode 22, but for the purpose of schematically showing an exposed portion in the cathode 21 or the anode 22, simplifying drawings, and clearly contrasting Examples 6 through 10 with Examples 1 through 5, it is assumed that the solid electrolyte layer is combined with the cathode mixed layer 21b or the anode mixed layer 22b, so the solid electrolyte layer is not shown in drawings and will not be described in the following detailed description of Examples 6 through 10.

### (Example 6)

In Example 6, in the above thin solid electrolyte battery, the cathode 21 had the double-sided exposed portion 27 as schematically shown in FIG. 7, and the anode 22 had the double-sided exposed portion 32 as shown in FIG. 12, and a laminate including the cathode 21 and the anode 22 with the separator 23 in between was spirally wound so that one turn of the double-sided exposed portion 27 or the double-sided exposed portion 32 was wound around the outermost circumference, thereby the spirally wound electrode body 20 was formed. As a result, as shown in FIG. 20, the rated capacity was 600 mAh, and the energy density was 269 Wh/l, and the package temperature was 105°C.

### (Example 7)

In Example 7, as in the case of Example 1, the spirally wound electrode body 20 was formed, except that the cathode 21 had the single-sided exposed portion 28 as shown in FIG. 8, and the anode 22 had the double-sided exposed portion 32 as shown in FIG. 12, and a laminate including the cathode 21 and the anode 22 with the separator 23 in between was spirally wound. As a result, as shown in FIG. 20, the rated capacity was 610 mAh, and the energy density was 274 Wh/l, and the package temperature was 115°C.

### (Example 8)

In Example 8, as in the case of Example 1, the spirally wound electrode body 20 was formed, except that the cathode 21 had the single-sided exposed portion 28 as shown in FIG. 8, and the anode 22 had the single-sided exposed portion 31 in a position corresponding to the innermost circumference as shown in FIG. 15, and a laminate including the cathode 21 and the anode 22 with the separator 23 in between was spirally wound so that the single-sided exposed portion 28 was exposed on the outermost circumference. As a result, as shown in FIG. 20, the rated capacity was 620 mAh, and the energy density was 278 Wh/l, and the package temperature was 103°C.

### (Example 9)

In Example 9, as in the case of Example 1, the spirally wound electrode body 20 was formed, except that the cathode 21 had the single-sided exposed portion 28 and the double-sided exposed portion 29 as shown in FIG. 9, and the anode had the single-sided exposed portion 31 in a position corresponding to the innermost circumference as shown in FIG. 15, and a laminate including the cathode 21 and the anode 22 with the separator 23 in between was spirally wound so that the double-sided exposed portion 29 was exposed on the outermost circumference and the single-sided exposed portion 31 was exposed on the innermost circumference. As a result, as shown in FIG. 20, the rated capacity was 605 mAh, and the energy density was 271 Wh/l, and the package temperature was 89°C.

### (Example 10)

In Example 10, as in the case of Example 1, the spirally wound electrode body 20 was formed, except that the cathode 21 had the single-sided exposed portion 28 and the double-sided exposed portion 29 as shown in FIG. 9, and the anode 22 had the double-sided exposed portion 32 in a position corresponding to the outermost circumference and the single-sided exposed portion 31 in a position corresponding to the innermost circumference as shown in FIG. 11, and a laminate including the cathode 21 and the anode 22 with the separator 23 in between was spirally wound so that the double-sided exposed portion 29 was exposed on the outermost circumference and the single-sided exposed portion 31 was exposed on the innermost circumference. As a result, as shown in FIG. 20, the rated capacity was 595 mAh, and the energy density was 267 Wh/l, and the package temperature was 82°C.

### (Comparative Example 2)

As Comparative Example 2, a spirally wound electrode body (not shown) with a structure using a so-called solidly coated electrode in which no exposed portion was disposed on a surface of a current collector made of metal foil was formed, and a battery having the same electrochemical characteristics as those in Examples 6 through 10 and a different structure from Examples 6 through 10 was formed by using the spirally wound electrode body. Then, the same test in the case of the above examples was carried out on the battery. As a result, as shown in FIG. 20, the rated capacity was 580 mAh, and the energy density was 260 Wh/l, and the package temperature was 142°C.

To sum up the results of Examples 6 through 10 and Comparative Example 2, the rated capacity and the energy density in each of Examples 6 through 10 were higher than those in Comparative Example 2, and the package temperature in each of Examples 6 through 10 was lower than that in Comparative Example 2. It was considered that the reason why the rated capacity varied in Examples 6 through 10 and Comparative Example 2 was that the length which could be contained in the moisture-proof package 51 varied depending upon the structure of the cathode 21 or the anode 22. Moreover, it was considered that as a portion not substantially contributing to an electrochemical electromotive force in the battery was removed, the energy density of the battery in each of Examples 6 through 10 was improved more than the energy density of the battery in Comparative Example 2. Further, it was considered that the energy density in Example 10 was relatively low among Examples 6 through 10, because the double-sided exposed portion 29 of the cathode current collector 21a not directly contributing to an electrochemical electromotive force was wound around the outermost circumference. On the other hand, the package temperature in Example 10 was 82°C, which was obviously kept at a lower temperature, compared to other examples, because it was considered that the outermost circumference was covered with the double-sided exposed portion 29 of the cathode current collector 21a, so heat generated in the battery was absorbed or dispersed in the portion. As the results of Examples 6 through 10 and Comparative Example 2, it was confirmed that in the battery according to the embodiment, a further improvement in the energy density could be achieved, and even if heat was generated in the battery resulting from an abnormally high battery voltage or the occurrence of a short circuit, the safety of the battery could be secured.

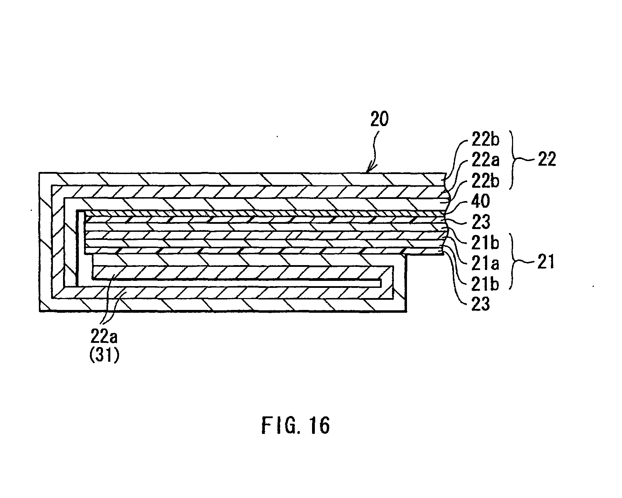

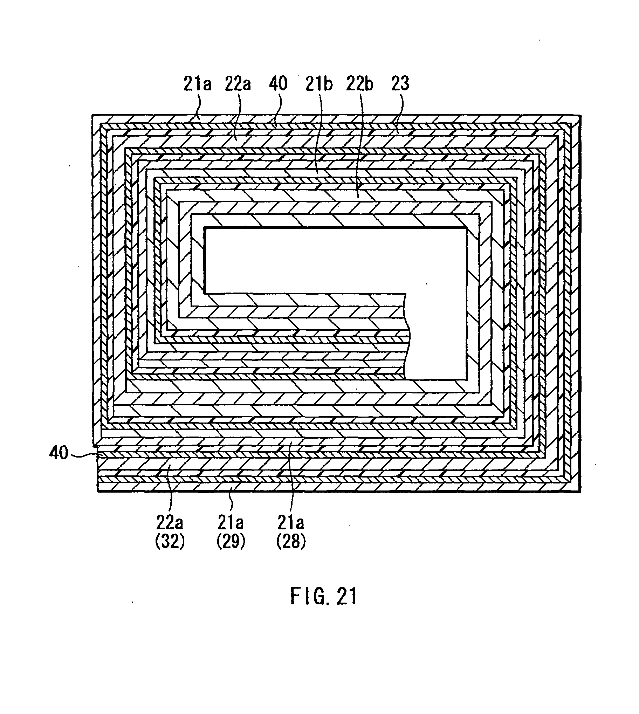

Moreover, in the spirally wound electrode body 20 of the solid electrolyte battery, in addition to Examples 6 through 10, for example, as shown in FIG. 21, the cathode 21 may have the single-sided exposed portion 28 and the double-sided exposed portion 29 as shown in FIG. 9, and the anode 22 may have the double-sided exposed portion 32 as shown in FIG. 12 as an example, and a laminate including the cathode 21 and the anode 22 with the separator 23 in between is spirally wound so that the double-sided exposed portion 32 of the anode 22 is sandwiched between the single-sided exposed portion 28 and the double-sided exposed portion 29 of the cathode 21, thereby the battery can have a structure in which the double-sided exposed portion 29 of the cathode 21 is exposed on the outermost circumference. Alternatively, as shown in FIG. 16 as an example, the battery can have a structure in which the single-sided exposed portion 31 of the anode is exposed on the innermost circumference.

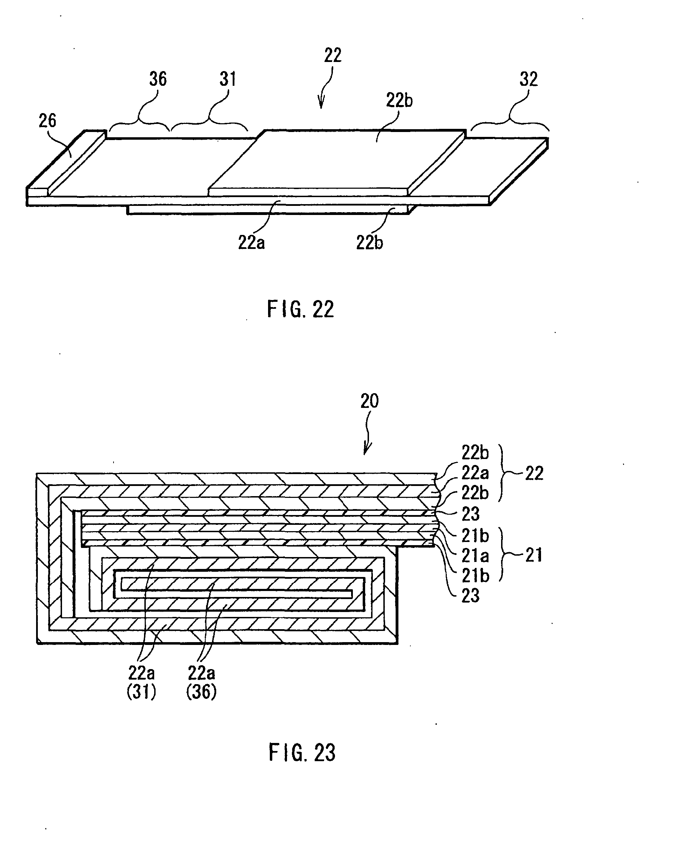

Although the present invention is described referring to the embodiments and the examples, the invention is not limited to the embodiments and the examples, and can be variously modified. For example, in the above embodiments, as shown in FIG. 5A or 5B, the case where the single-sided exposed portion 31 of the anode current collector 22a or the single-sided exposed portion 30 of the cathode current collector 21a is exposed on the innermost circumference of the spirally wound electrode body 20 is described; however, the structure of the innermost circumference of the spirally wound electrode body 20 is not limited to this. For example, as shown in FIG. 22, a double-sided exposed portion 36 of which an outer surface and inner surface are exposed may be formed in a position closer to the inner circumferential side than the single-sided exposed portion 31 of the anode current collector 22a, and as shown in FIG. 23, a portion in a position closer to the inner circumferential side than the single-sided exposed portion 31 may be covered with the double-sided exposed portion 36 in the spirally wound electrode body 20.

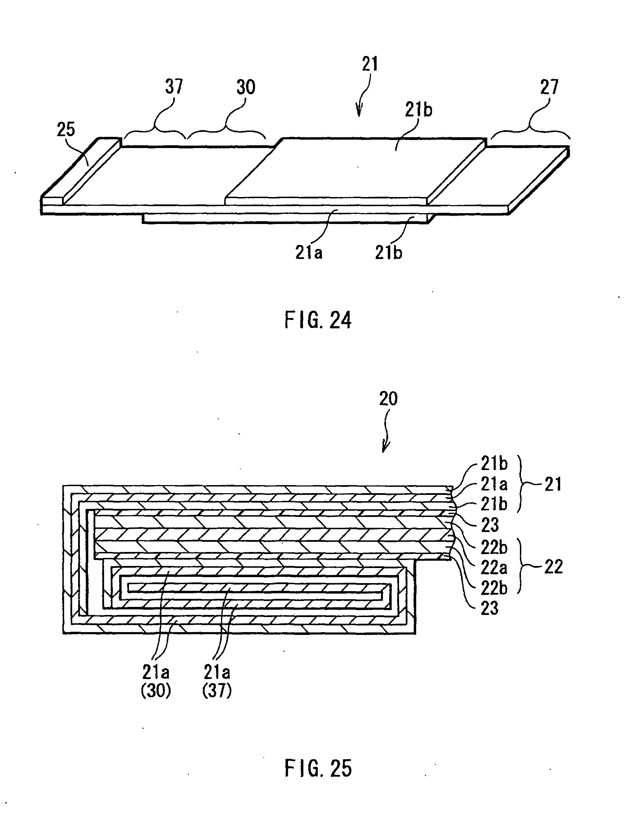

Moreover, for example, as shown in FIG. 24, a double-sided exposed portion 37 of which an outer surface and an inner surface are exposed may be formed in a position closer to the inner circumferential side than the single-sided exposed portion 30 of the cathode current collector 21a, and as shown in FIG. 25, a portion in a position closer to the inner circumferential side than the single-sided exposed portion 30 may be covered with the both end exposed portion 37 in the spirally electrode body 20.

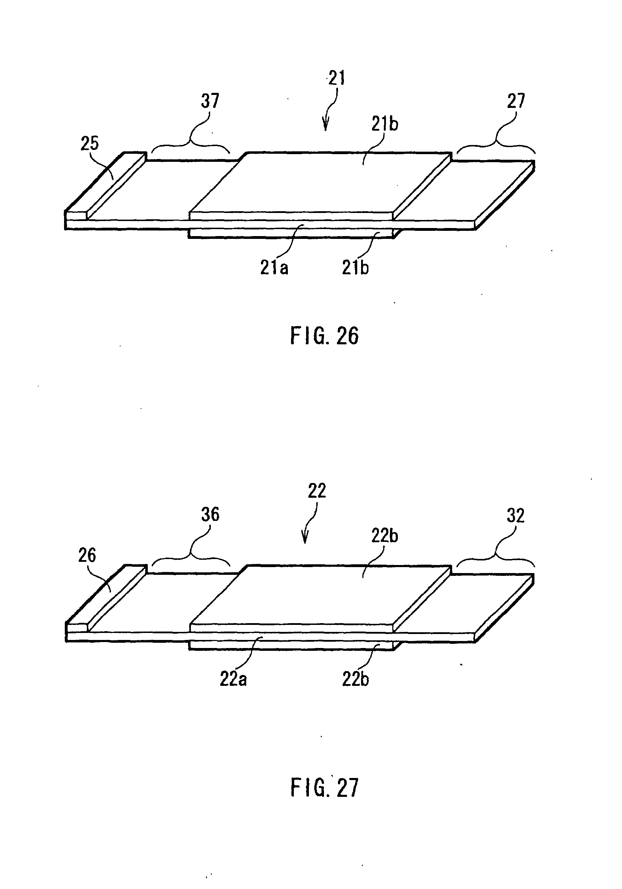

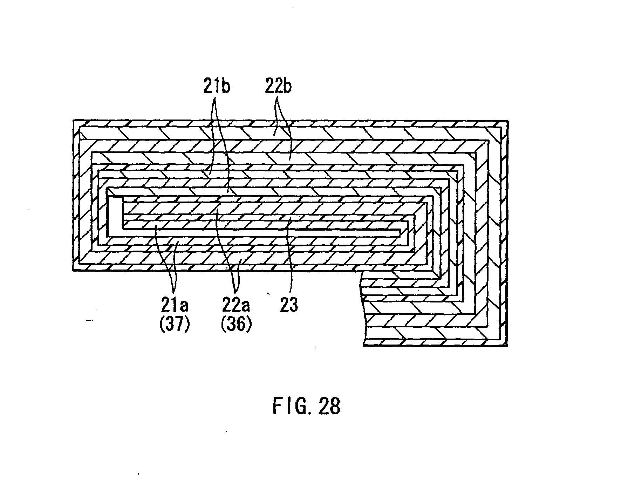

Further, for example, in the above embodiments, as shown in FIG. 6, the structure in which the outermost circumference of the spirally wound electrode body 20 is covered with a laminate including the double-sided exposed portion 32 of the anode current collector 22a and the double-sided exposed portion 27 of the cathode current collector 21a with the separator 23 in between is described; however, as shown in FIG. 26, the double-sided exposed portion 37 is disposed at an end of the cathode current collector 21a in a position corresponding to the innermost circumference, and as shown in FIG. 27, the double-sided exposed portion 36 is disposed at an end of the anode current collector 22a in a position corresponding to the innermost circumference, and as shown in FIG. 28, the innermost circumference of the spirally wound electrode body 20 may be covered with a laminate including the double-sided exposed portion 36 of the anode current collector 22a and the double-sided exposed portion 37 of the cathode current collector 21a with the separator 23 in between. Further, in FIG. 28, the cathode current collector 21a is exposed on the innermost circumference of the spirally electrode body 20, but the anode current collector 22a may be exposed on the innermost circumference of the spirally wound electrode body 20.

Further, in the above embodiments and the above examples, the case where the electrolyte solution or the solid electrolyte is used is described, but a gel electrolyte as an example of the solid electrolyte may be used. Further, any other electrolyte may be used. For example, an organic solid electrolyte in which an electrolyte salt is dispersed in a high molecular weight compound having ionic conductivity, an inorganic solid electrolyte made of ion-conductive ceramic, ion-conductive glass, ionic crystal or the like, a mixture of the inorganic solid electrolyte and an electrolyte solution, a mixture of the inorganic solid electrolyte and the gel electrolyte, or a mixture of the inorganic solid electrolyte and the organic solid electrolyte is cited.

Further, in the above embodiments and the examples, the cylindrical secondary battery and the thin secondary battery with a spirally wound structure is described; however, the invention is applicable to an elliptic shaped or a polygonal shaped secondary battery with a spirally wound structure, or a secondary battery with a structure in which the cathode and the anode are folded or laminated in a like manner. In addition, the invention is applicable to a secondary battery with a coin shape, a button shape, a card shape or the like. Further, the invention is applicable to not only the secondary batteries but also primary batteries.

As described above, according to the battery of the invention, as an outermost circumferential portion or an innermost circumferential portion of the anode active material layer or the cathode active material layer is removed, an improvement in the volume energy density or the weight energy density can be achieved. Moreover, the spirally wound body (spirally wound electrode body) is covered with a portion of the cathode current collector to which the cathode active material layer is not applied or a portion of the anode current collector to which the anode active material layer is not applied, thereby the spirally wound electrode body can be protected from the external application of pressure or damage, and a short circuit, damage or the like in the battery can be prevented from being extended in the vicinity of the outermost circumference or the innermost circumference of the spirally wound electrode body of the battery. Further, heat generated in the battery can be absorbed or dispersed.

Obviously many modifications and variations of the present invention are possible in the light of the above teachings. It is therefore to be understood that within the scope of the appended claims the invention may be practiced otherwise than as specifically described.

## Claims

1. A battery, comprising:
a spirally wound body formed through spirally winding a laminate including a cathode having a cathode active material layer on a surface of a cathode current collector and an anode having an anode active material layer on a surface of an anode current collector with a separator in between,
wherein the capacity of the anode is represented by the sum of a capacity component by insertion and extraction of light metal and a capacity component by precipitation and dissolution of the light metal, and
an outermost circumferential surface of the spirally wound body is covered with the cathode current collector, and the cathode current collector has an exposed portion with an outer circumferential surface not covered with the cathode active material layer in a position corresponding to at least one turn around an outermost circumference of the spirally wound body.

2. A battery, comprising:
a spirally wound body formed through spirally winding a laminate including a cathode having a cathode active material layer on a surface of a cathode current collector and an anode having an anode active material layer on a surface of an anode current collector with a separator in between,
wherein the capacity of the anode is represented by the sum of a capacity component by insertion and extraction of light metal and a capacity component by precipitation and dissolution of the light metal, and
an outermost circumferential surface of the spirally wound body is covered with the anode current collector, and the anode current collector has an exposed portion with an outer circumferential surface not covered with the cathode active material layer in a position corresponding to at least one turn around an outermost circumference of the spirally wound body.

3. A battery according to claim 1, wherein
the exposed portion of the cathode current collector is covered with an exposed portion of the cathode current collector with both surfaces exposed on an outer circumferential side.

4. A battery according to claim 2, wherein
the exposed portion of the anode current collector is covered with an exposed portion of the anode current collector with both surfaces exposed on an outer circumferential side.

5. A battery, comprising:
a spirally wound body formed through spirally winding a laminate including a cathode having a cathode active material layer on a surface of a cathode current collector and an anode having an anode active material layer on a surface of an anode current collector with a separator in between,
wherein the capacity of the anode is represented by the sum of a capacity component by insertion and extraction of light metal and a capacity component by precipitation and dissolution of the light metal, and
an innermost circumferential surface of the spirally wound body is covered with the cathode current collector, and the cathode current collector has an exposed portion with an inner circumferential surface not covered with the cathode active material layer in a position corresponding to at least one turn around an innermost circumference of the spirally wound body.

6. A battery, comprising:
a spirally wound body formed through spirally winding a laminate including a cathode having a cathode active material layer on a surface of a cathode current collector and an anode having an anode active material layer on a surface of an anode current collector with a separator in between,
wherein the capacity of the anode is represented by the sum of a capacity component by insertion and extraction of light metal and a capacity component by precipitation and dissolution of the light metal, and
an innermost circumferential surface of the spirally wound body is covered with the anode current collector, and the anode current collector has an exposed portion with an inner circumferential surface not covered with the anode active material layer in a position corresponding to at least one turn around a innermost circumference of the spirally wound body.

7. A battery according to claim 5, wherein
the exposed portion of the cathode current collector is covered with an exposed portion of the cathode current collector with both surfaces exposed on an inner circumferential side.

8. A battery according to claim 6, wherein
the exposed portion of the anode current collector is covered with an exposed portion of the anode current collector with both surfaces exposed on an inner circumferential side.

9. A battery, comprising:
a spirally wound body formed through spirally winding a laminate including a cathode having a cathode active material layer on a surface of a cathode current collector and an anode having an anode active material layer on a surface of an anode current collector with a separator in between,
wherein the capacity of the anode is represented by the sum of a capacity component by insertion and extraction of light metal and a capacity component by precipitation and dissolution of the light metal, and
the cathode current collector has an exposed portion with an outer circumferential surface and an inner circumferential surface both not covered with a cathode active material layer,
the anode current collector has an exposed portion with an outer circumferential surface and an inner circumferential surface both not covered with an anode active material layer, and
a laminate including the exposed portion of the cathode current collector and the exposed portion of the anode current collector with a separator in between is disposed on an outermost circumference of the spirally wound body.

10. A battery, comprising:
a spirally wound body formed through spirally winding a laminate including a cathode having a cathode active material layer on a surface of a cathode current collector and an anode having an anode active material layer on a surface of an anode current collector with a separator in between,
wherein the capacity of the anode is represented by the sum of a capacity component by insertion and extraction of light metal and a capacity component by precipitation and dissolution of the light metal, and
the cathode current collector has an exposed portion with an outer circumferential surface and an inner circumferential surface both not covered with a cathode active material layer,
the anode current collector has an exposed portion with an outer circumferential surface and an inner circumferential surface both not covered with an anode active material layer, and
a laminate including the exposed portion of the cathode current collector and the exposed portion of the anode current collector with a separator in between is disposed on an innermost circumference of the spirally wound body.

11. A battery according to claim 1, wherein
the anode includes an anode material capable of inserting and extracting the light metal.

12. A battery according to claim 11, wherein
the anode includes a carbon material.

13. A battery according to claim 12, wherein
the anode includes at least one kind selected from the group consisting of graphite, graphitizing carbon and non-graphitizable carbon.

14. A battery according to claim 13, wherein
the anode includes graphite.

15. A battery according to claim 11, wherein
the anode includes at least one kind selected from the group consisting of a metal capable of forming an alloy or a compound with the light metal, a semiconductor capable of forming an alloy or a compound with the light metal, an alloy of the metal or the semiconductor, and a compound of the metal or the semiconductor.

16. A battery according to claim 15, wherein
the anode includes at least one kind selected from the group consisting of tin (Sn), lead (Pb), aluminum (Al), indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), hafnium (Hf), zirconium (Zr) and yttrium (Y), an alloy thereof, and a compound thereof.

17. A battery according to claim 1, wherein
the light metal includes lithium (Li).

18. A battery according to claim 2, wherein
the anode include an anode material capable of inserting and extracting the light metal.

19. A battery according to claim 18, wherein
the anode includes a carbon material.

20. A battery according to claim 19, wherein
the anode includes at least one kind selected from the group consisting of graphite, graphitizing carbon and non-graphitizable carbon.

21. A battery according to claim 20, wherein
the anode includes graphite.

22. A battery according to claim 18, wherein
the anode includes at least one kind selected from the group consisting of a metal capable of forming an alloy or a compound with the light metal, a semiconductor capable of forming an alloy or a compound with the light metal, an alloy of the metal or the semiconductor, and a compound of the metal or the semiconductor.

23. A battery according to claim 22, wherein
the anode includes at least one kind selected from the group consisting of tin (Sn), lead (Pb), aluminum (Al), indium (In), silicon (Si), zinc (Zn), antimony (Sb), bismuth (Bi), cadmium (Cd), magnesium (Mg), boron (B), gallium (Ga), germanium (Ge), arsenic (As); silver (Ag), hafnium (Hf), zirconium (Zr) and yttrium (Y), an alloy thereof and a compound thereof.

24. A battery according to claim 2, wherein
the light metal includes lithium (Li).
